# EUROPEAN PATENT APPLICATION

(11) **EP 1 661 855 A1**
(43) Date of publication of application: **31.05.2006**
(21) Application number: 04772362.2
(22) Date of filing: 27.08.2004
(51) Int. Cl.: C01B 31/02, B82B 3/00

(54) **CARBON NANOWALL PRODUCING METHOD, CARBON NANOWALL, AND PRODUCTION APPARATUS**

(30) Priority: 27.08.2003 JP 2003303484
(71) Applicant: Hiramatsu, Mineo, Aichi-gun, Aichi 4700162 (JP); Hori, Masaru, Nisshin-shi, Aichi 470-0117 (JP); NU Eco Engineering Co., Ltd., Nishikamo-gun, Aichi 470-0201 (JP)
(72) Inventor: HIRAMATSU, Mineo, Aichi 4700162 (JP); HORI, Masaru, Aichi 470-0117 (JP)
(74) Representative: TBK-Patent
(86) International application number: PCT/JP2004/012406
(87) International publication number: WO 2005/021430

(57) **Abstract**

To provide a novel method for producing carbon nanowalls and an apparatus suitable for carrying out the method. [Solving Means] A source gas 32 containing carbon is introduced into a reaction chamber 10. The reaction chamber 10 includes a parallel plate-type capacitively coupled plasma (CCP) generator 20 including a first electrode 22 and a second electrode 24. The irradiation of electromagnetic waves plasmatizes the source material 32 to create a plasma atmosphere 34. In a radical-generating chamber 41 disposed outside the reaction chamber 10, hydrogen radicals 38 are generated by decomposing radical source gas 36 containing hydrogen using RF waves or other waves. The hydrogen radicals 38 are introduced into the plasma atmosphere 34, whereby carbon nanowalls are formed on a substrate 5 disposed on the second electrode 24.

## Description

### Technical Field

The present invention relates to a method for producing nanostructures principally containing carbon, an apparatus for producing such nanostructures, and a plasma-processing apparatus.

### Background Art

There are various known nanostructures (carbon nazzostructures) principally containing carbon. Examples of the carbon nanostructures include fullerenes and carbon nanotubes. Patent Document 1 discloses carbon nanostructures referred to as carbon nanowalls. In Patent Document 1, microwaves are applied to a mixture containing, for example, CH₄ and H₂, whereby the carbon nanowalls are formed on a sapphire substrate coated with a nickel-iron catalyst. Patent Document 2 discloses a technique for forming a thin film or microfabrication technique by introducing radicals into a plasma. Patent Document 3 discloses a technique for determining the concentration of radicals. The following apparatuses have been recently disclosed: an apparatus for depositing a film on a substrate using a plasma generated from a source gas and an apparatus for etching a substrate using a plasma generated from a reactive gas.
Patent Document 1: United States Patent Application Publication No. 2003/0129305
Patent Document 2: Japanese Unexamined Patent Application Publication No. 9-137274
Patent Document 3: Japanese Unexamined Patent Application Publication No. 10-102251

### Disclosure of Invention

### Problems to be Solved by the Invention

Patent Document 1 discloses that the carbon nanowalls are formed on a silicon substrate; however, if the silicon substrate is not coated with a metal catalyst, the carbon nanowalls cannot be formed. The following techniques are not disclosed in this document: a technique for forming the carbon nanowalls using CF₄ and/or CHF₃; a technique for forming the carbon nanowalls using a gas mixture containing CH₄ and C₂F₆, CF₄, or CHF₃; and a technique for introducing H radicals into a reaction region. Carbon nanowalls longitudinally oriented have not been known. Patent Document 2 discloses the formation of a diamond thin-film. The following techniques are not disclosed in Patent Document 2: a technique for forming carbon nanowalls, a technique for forming the thin-film using a gaseous compound (for example, C₂F₆, CF₄, or CHF₃) containing carbon and fluorine, and a technique for forming the carbon nanowalls using a gas mixture containing CH₄ and C₂F₆, CF₄, or CHF₃. The carbon nanowalls can be probably used for various applications; however, no method for producing the carbon nanowalls with high reproducibility and efficiency has been developed yet. Therefore, it is an object of the present invention to provide a novel method for producing carbon nanowalls. It is another object of the present invention to provide an apparatus suitable for carrying out the method. It is another object of the present invention to provide a method for producing carbon nanowalls having properties and/or characteristics that can be readily controlled. It is another object of the present invention to provide an apparatus suitable for carrying out this method. It is another object of the present invention to provide a novel oriented carbon nanowall. It is another object of the present invention to provide a carbon nanowall containing no metal catalyst. It is another object of the present invention to provide a plasma-processing apparatus useful in forming a thin film using a plasma or useful for precise microfabrication for ashing or etching. It should be construed that these objects are achieved individually but it should not be construed that these objects are achieved simultaneously.

### Means for Solving the Problems

The inventors have discovered that carbon nanowalls can be produced by feeding radicals to a plasma atmosphere created by plasmatizing a source material containing carbon.

The present invention provides a method for producing carbon nanowalls. In the method, a plasma atmosphere is created in at least one region of a reaction chamber by plasmatizing a source material containing carbon. Radicals generated outside the plasma atmosphere are introduced into the plasma atmosphere. Carbon nanowalls are grown on a base material disposed in the reaction chamber. According to the method, the composition and/or feed rate of the radicals introduced into the plasma atmosphere can be controlled independently of or in conjunction with one or more production conditions. That is, the method has a higher degree of freedom in controlling production conditions as compared to methods in which no radicals generated outside are introduced into plasma atmospheres. This is advantageous in that carbon nanowalls having desired properties (thickness, height, density, flatness, and surface area) and/or characteristics (electrical characteristics such as field emission characteristics) can be produced.

The term "carbon nanowall" used herein is defined as a two-dimensional carbon nanostructure, which is a two-dimensional graphene sheet extending from a base material and may be single- or multi-walled. The term "two-dimensional" means that the longitudinal length and lateral length of a face of the nanostructure are sufficiently greater than the thickness (width) of the nanostructure. The nanostructure may be single- or multi-walled or may include a pair of layers (layers between which a space is present). The upper face of the nanostructure may be covered with anything and may therefore have an internal hollow. The carbon nanowalls have a thickness of about 0.05 to 30 nm and have faces of which the longitudinal length and lateral length are about 100 nm to 10 µm. Since the longitudinal length and lateral length of each face are extremely greater than the thickness of each carbon nanowall and can be controlled, the carbon nanowalls are expressed to be two-dimensional. Typical examples of the carbon nanowalls produced by the method include carbon nanostructures that have walls extending from a base material in substantially a single direction. Fullerenes (C₆₀ and the like) can be categorized as zero-dimensional carbon nanostructures and carbon nanotubes can be categorized as one-dimensional carbon nanostructures. The term "plasma atmosphere" described above is defined as an atmosphere containing partly ionized substances (charged particles such as atomic ions, molecular ions, and/or electrons and neutral particles such as atoms, molecules, and/or radicals (plasma particles)).

In the method, the plasma atmosphere is preferably created by plasmatizing the source material in the reaction chamber. Alternatively, the plasma atmosphere may be created in such a manner that the source material is plasmatized outside the reaction chamber and plasma particles are then introduced into the reaction chamber. The radicals are introduced into the plasma atmosphere from outside. It is preferable that the radicals be generated by decomposing a radical source in a radical-generating chamber disposed outside a principal chamber containing the reaction chamber and then introduced into the plasma atmosphere in the reaction chamber. Alternatively, the radicals may be generated by decomposing the radical source in a radical-generating chamber which is disposed in a principal chamber containing the reaction chamber and which is located outside the plasma atmosphere and may be then introduced into the plasma atmosphere. That is, the present invention is characterized in that the radicals are generated in a region different from a process region for depositing or processing using plasma particles generated from the source material and then introduced into the process region, whereby the carbon nanowalls are grown or processing is performed under controlled deposition and/or processing conditions. In the claims and specification of this application, the reaction chamber and the reaction region have the same meaning and the radical-generating chamber and the radical-generating region have the same meaning. This means that reaction chamber and the radical-generating chamber are partitioned regions.

Irradiating the radical source with electromagnetic waves is a preferable way to generate the radicals from the radical source. Examples of the electromagnetic waves include microwaves and high-frequency waves (UHF waves, VHF waves, and RF waves). The VHF waves or the RF waves are preferably used. According to the technique, the decomposition degree of the radical source (the amount of the generated radicals) can be readily controlled by varying the frequency and/or the input electric power. The technique is advantageous in that conditions (the feed rate of the radicals fed to the plasma atmosphere and the like) for producing the carbon nanowalls can be readily controlled. As well known, the term "microwave" is defined as an electromagnetic wave with a wavelength of about 1 GHz or more. The term "UHF wave" is defined as an electromagnetic wave with a wavelength of about 300 to 3000 MHz, the term "VHF wave" is defined as an electromagnetic wave with a wavelength of about 30 to 300 MHz, and "RF wave" is defined as an electromagnetic wave with a wavelength of about 3 to 30 MHz. Applying a direct current voltage to the radical source is another preferable way to generate the radicals from the radical source. Other examples of such ways include a way to apply light rays (for example, visible rays or ultraviolet rays) to the radical source, a way to apply an electron beam to the radical source, and a way to heat the radical source. Alternatively, the radicals may be generated in such a manner that a member containing a metal catalyst is heated and the radical source is brought into contact with the resulting member (that is, due to heat and catalysis). The metal catalyst contains at least one selected from the group consisting of Pt, Pd, W, Mo, and Ni.

The radicals introduced into the plasma atmosphere preferably include hydrogen radicals (that is, hydrogen atoms or "H radicals" in some cases). The hydrogen radicals are preferably generated by decomposing a radical source containing hydrogen and then introduced into the plasma atmosphere. Gaseous hydrogen (H₂) is a preferable example of the radical source. The use of the hydrogen radicals allows the carbon nanowalls to be uniformly formed. The presence of OH radicals or O radicals prevents the carbon nanowalls from being formed.

Examples of the source material include various substances containing carbon. Such substances may be used alone or in combination. Substances (hydrocarbons and the like) containing carbon and hydrogen are preferred examples of the source material. Substances (fluorocarbons and the like) containing carbon and fluorine are other preferred examples of the source material.

Furthermore, substances (fluorohydrocarbons and the like) containing carbon, hydrogen, and hydrogen are preferred examples of the source material. A substance containing carbon and fluorine, for example, C₂F₆ or CF₄, is useful in producing carbon nanowalls having good configurations as described below. Furthermore, a substance containing carbon, hydrogen, and fluorine, for example, CHF₃, is useful in producing carbon nanowalls having good configurations. If a substance containing carbon and hydrogen, for example, CH₄, is used, obtained carbon nanowalls have disordered configurations and include whiskers extending perpendicularly to the carbon nanowalls, that is, these carbon nanowalls are incomplete. However, these carbon nanowalls are suitable for hydrogen occlusion. The inventors have discovered that such a substance containing carbon and fluorine is useful in producing carbon nanowalls having good configurations. An increase in the F content of this substance increases the spacing between obtained carbon nanowalls. Furthermore, the inventors have discovered that if different source materials are alternately used to grow carbon nanowalls, configurations of these carbon nanowalls depend on the types of the source materials. On the basis of this phenomenon, carbon nanowalls each having the following regions can be produced: regions formed using a gaseous substance containing carbon and hydrogen and regions formed using another gaseous substance containing carbon and fluorine. These nanostructures are probably useful in enhancing the hydrogen storage capacity of fuel cells. It is supposed that species growing into carbon nanowalls are created during an initial stage of a step of growing the carbon nanowalls and configurations of the grown carbon nanowalls depend on the distribution of the growing species. On the basis of this phenomenon, carbon nanowalls may be produced in such a manner that different source materials are alternately used during a step of growing the carbon nanowalls. A mechanism for forming these carbon nanowalls is as follows: CFₓ radicals and/or CₓF_{y} radicals are generated by plasmatizing C₂F₆ and F atoms are removed from the fluorocarbon radicals by the reaction of these fluorocarbon radicals with H radicals, whereby graphite structures are formed, that is, the carbon nanowalls are formed.

Furthermore, the inventors have discovered that properties of the carbon nanowalls produced by the method vary depending on if the base material is grounded or insulated. The inventors have discovered that configurations of the carbon nanowalls, the spacing therebetween, the thickness and size thereof can be controlled by varying the ratio of the flow rate of gaseous H₂, which is the radical source, for generating the H radicals to that of the gaseous source material. This leads to the invention of the method for producing the carbon nanowalls, of which properties can be controlled by varying the feed rate of the radicals fed to the reaction region. Furthermore, the inventors have discovered that the carbon nanowalls produced using C₂F₆, CF₄, or CHF₃ have properties different from those of the carbon nanowalls produced using CH₄. This leads to the invention of the method for producing the carbon nanowalls, of which properties can be controlled by varying the ratio of the feed rate of the source material containing carbon and fluorine to that of the source material containing carbon and hydrogen. An increase in the fluorine content of the source material increases the spacing between the carbon nanowalls and the thickness thereof. The control of properties of the carbon nanowalls leads to the optimization of the hydrogen storage capacity of fuel cells or that of electron emission properties of field emission transistors.

The inventors are the first to discover that the carbon nanowalls are substantially oriented longitudinally in the direction of an electric field for generating a plasma in such a manner that a line normal to the base material is tilted with respect to the direction of the electric field. The carbon nanowalls grown on the base material probably oriented longitudinally in the direction of the applied radicals in such a manner that the H radicals are applied to the base material in the direction tilted with respect to the line normal to the base material. These lead to the invention of the method for producing the carbon nanowalls, which are oriented in such a manner that the line normal to the base material is tilted with respect to the direction of the electric field or the radicals are applied to the base material in the direction tilted with respect to the line normal to the base material. Any carbon nanowalls substantially oriented longitudinally have not been obtained yet. The carbon nanowalls, produced by the method, having oriented nanostructures are novel and patentable. Before the carbon nanowalls are grown, the base material is heated and the radicals (preferably the H radicals) are applied to the base material without plasmatizing the source material (preferably without feeding the source material. Subsequently, the source material is plasmatized, whereby the carbon nanowalls are grown. The inventors are the first to discover the carbon nanowalls grown as described above are tightly bonded to the base material, that is, the mechanical bonding therebetween is high. This leads to the invention of a technique for pretreating the base material by irradiation with the radicals.

In the method, at least one of conditions for producing the carbon nanowalls is preferably controlled on the basis of the concentration of at least one of the types of the radicals (the carbon radicals, the hydrogen radicals, or the fluorine radicals) in the reaction chamber. Examples of the conditions controllable on the basis of the radical concentration include the feed rate of the source material, the plasmatization degree (the severity of plasmatization) of the source material, and the feed rate of the radicals (typically the H radicals). The production conditions are preferably feedback-controlled on the basis of the radical concentration. According to the method, the carbon nanowalls having desired properties and/or characteristics can be efficiently produced.

In the method, the base material preferably has no metal catalyst disposed thereon. Even if no metal catalyst is present on the base material, the carbon nanowalls can be securely formed on the base material by the method. The method is the first to produce the carbon nanowalls without using any metal catalyst. Although metal catalysts are usually used to produce ordinary types of carbon nanowalls, the method is useful in producing the carbon nanowalls having good configurations without using any metal catalyst. If a metal catalyst is used to produce the carbon nanowalls, particles of the metal catalyst remain on the lower faces and upper faces of the carbon nanowalls. The catalyst particles are defective depending on applications of the carbon nanowalls. The method is the first to produce the carbon nanowalls containing no metal catalyst. Since the carbon nanowalls contain no metal catalyst and have two-dimensional nanostructures, the carbon nanowalls are novel and patentable and can be used for various applications. The present invention provides an apparatus for producing carbon nanowalls on a base material. The apparatus includes a reaction chamber to which a source material containing carbon is fed and in which the base material is disposed, a plasma discharger for plasmatizing the source material in the reaction chamber, a radical-generating chamber to which a radical source (typically a material containing hydrogen) is fed, and a radical generator for generating radicals from the radical source in the radical-generating chamber. The radicals generated by the radical generator are introduced into the reaction chamber. In the apparatus, at least one of the composition and feed rate of the radicals introduced into the reaction chamber can be controlled independently of one or more of conditions (for example, conditions for plasmatizing the source material) for producing the carbon nanowalls or in conjunction with one or more of other production conditions. That is, the apparatus has a high degree of freedom in controlling the conditions for producing the carbon nanowalls. The apparatus is suitable for carrying out the method described above.

In the apparatus, the radical generator preferably has a function of applying microwaves, UHF waves, VHF waves, or RF waves to the radical-generating chamber. The radical generator is preferably a type of inductively coupled plasma (ICP) generator. Alternatively, the radical generator may have a function of heating a member, opposed to the radical-generating chamber, containing a catalytic metal element (Pt, Pd, W, Mo, or Ni). For example, a wavy Ni wire (a catalytic metal element-containing member) may be placed in the radical-generating chamber. H₂, which is an example of the radical source, is brought into contact with the wire heated by applying a current thereto. This allows H radicals to be generated due to the catalysis of Ni. The catalytic metal element-containing member may be heated to about 300°C to 800°C and preferably 400°C to 600°C. The plasma discharger is preferably a type of capacitively coupled plasma (CCP) generator.

In the apparatus, the radical generator is preferably configured such that the radicals are fed to the reaction chamber through a radical-introducing port that open on a face of the base material on which the carbon nanowalls are formed. Alternatively, the reaction chamber preferably has a plurality of radical-introducing ports, spaced from each other, opposed to the face of the base material on which the carbon nanowalls are formed, the base material being disposed in the reaction chamber. According to this configuration, the carbon nanowalls can be efficiently formed on the face of the base material. If the carbon nanowalls need to be formed on a wide region of the base material, this configuration is particularly effective.

The apparatus may further include a concentration-measuring unit for measuring the concentration of carbon radicals in the reaction chamber. The concentration-measuring unit includes a light emitter for emitting an emission line characteristic of the radicals (an emission line characteristic of carbon atoms) into the reaction chamber and a light detector for detecting the emission line emitted from the light emitter. According to this configuration, production conditions can be properly controlled on the basis of the concentration of the carbon radicals in the reaction chamber. Alternatively, the concentration of the carbon radicals in the reaction chamber can be precisely controlled. Therefore, the carbon nanowalls, which have desired properties and/or characteristics, can be efficiently produced. The light emitter may be configured such that the emission line characteristic of the carbon radicals (carbon atoms) is emitted by applying energy to, for example, a gaseous substance containing carbon.

Alternatively, the apparatus may further include a concentration-measuring unit for measuring the concentration of H radicals (hydrogen atoms) in the reaction chamber or a concentration-measuring unit for measuring the concentration of fluorine radicals (fluorine atoms) in the reaction chamber. The concentration-measuring unit may include a light emitter for emitting an emission line characteristic of measured radicals into the reaction chamber and a light detector for detecting the emission line emitted from the light emitter. Monitored or controlled species are not limited to the C radicals, the H radicals, or the F radicals and the following radicals may be monitored or controlled:
C₂ radicals, CF radicals, CF₂ radicals, CF₃ radicals, and CₓF_{y} radicals (X ≥ 1 and Y ≥ 1).

The apparatus may further include a control unit for controlling at least one condition for producing the carbon nanowalls on the basis of the radical concentration determined with any one of the concentration-measuring units. Examples of the production condition include the feed rate of the source material, the plasmatization degree of the source material, the feed rate of the radicals (typically the H radicals), the feed rate of the radical source, and the radicalization degree of the radical source. The production condition is preferably feedback-controlled on the basis of the radical concentration. According to this technique, the carbon nanowalls, which have desired properties and/or characteristics, can be efficiently produced.

The feed rate of the radical source and/or the electric power applied to the radical source is preferably controlled such that the feed rate of the radicals, particularly the H radicals, introduced into the reaction chamber is maintained at a predetermined value by measuring the amount of the radicals generated in the radical-generating chamber and/or the feed rate of the radicals flowing through the radical-introducing port. This technique is effective in the real-time control of the feed rate of the radicals, particularly the H radicals, introduced into the reaction chamber during a growing step and effective in producing the carbon nanowalls with high quality. In the case where the apparatus is used for ashing or etching a substrate, the feed rate of radicals introduced into the reaction chamber can be precisely controlled in real time during a processing step by this technique; hence, the substrate can be precisely processed.

In the reaction chamber, a plasma is generated from the source material by electric discharge. In the radical-generating chamber, in order to generate the radicals introduced into the reaction chamber, the radical source is plasmatized. If a high-frequency electric power is applied to the electrode disposed in the reaction chamber, discharge occurs between the radical generator and the electrode; the generated radicals are uncontrollable. Alternatively, no discharge or weak discharge can occur between the radical generator and the electrode on which the base material is disposed. Therefore, a shield member which is grounded and which has a large number of perforations is placed between the reaction chamber and the radical-generating chamber such that interference is prevented from occurring between the radical generator and the plasma discharger. Since the distance between the shield member and the electrode supplied with the high-frequency electric power is less than that between this electrode and the electrode on which the base material is disposed and the pressure in the reaction chamber is low, the discharge between the shield member and the electrode supplied with the high-frequency electric power is prevented.

A plasma-processing apparatus for introducing radicals into a plasma-containing reaction region to perform precise growth or processing is configured as described below. The plasma-processing apparatus is of a parallel plate type and includes a first electrode, having a large number of perforations, for applying an electric power; a second electrode which is opposed to the first electrode, which is parallel to the first electrode, and on which a workpiece is set; a reaction region to which gas is fed, which is located between the first and second electrodes, and in which a plasma is generated; a high-frequency power supply for applying high-frequency waves to a region between the first and second electrodes to plasmatize the gas; a radical-generating region which is spaced from the second electrode with the first electrode disposed therebetween and to which a radical source is fed; a radical generator for generating radicals from the radical source in the radical-generating region; a shield member which is disposed between the first electrode and the radical-generating region, which partitions the radical-generating region, which has a large number of perforations that are aligned with the perforations of the first electrode such that the radicals pass through these perforations, and which is grounded. The radicals generated by the radical generator are introduced into the reaction region through the perforations of the shield member and the perforations of the first electrode. Discharge is allowed to occur between the first and second electrodes, whereby the source material is plasmatized. Although a high-frequency electric power is applied to the first electrode, the radical generator can be protected from the high-frequency electric power because the shield member is disposed between the first electrode and the radical generator. Therefore, the plasma generated in the reaction region is stable. Furthermore, a plasma can be constantly generated in the radical-generating region; hence, the radicals can be constantly introduced into the reaction region. That is, the generation of the plasma from the source material in the reaction region and the generation of the radicals in the radical-generating region can be independently controlled. Since the radical-generating region is separated from the reaction region for generating the plasma, the radicals and the plasma can be independently generated in an optimum manner by applying different electric powers to these regions. For H radicals, the ionization energy of H₂ is extremely greater than that of a gaseous substance containing carbon and fluorine. If a gaseous substance containing H₂, carbon, and fluorine is fed between the first and second electrodes and then plasmatized, a large amount of the H radicals cannot be generated. However, since the radical-generating region is separated from the reaction region, a large electric power can be applied to the radical-generating region; hence, a large amount of the H radicals can be generated. The H radicals are introduced into the reaction region, whereby the density of the H radicals in the reaction region can be greatly enhanced. This is the reason for performing precise deposition or processing.

The radical generator may serve as a microhollow plasma generator and may include a pair of an inside electrode and an outside electrode, the inside and outside electrodes are spaced from each other and have a large number of microhollows which are aligned with each other and in which plasmas are generated, the inside electrode serves as a cathode, and the outside electrode is located close to the reaction region and grounded so as to serve as well as the shield member. Since the outside electrode serves as well as the shield member, the radical generator is simple. If the gas (gaseous source material) is fed to the reaction region through the perforations of the first electrode, the radicals are also fed to the reaction region through the perforations thereof; hence, the ratio of the feed rate of the gaseous source material to that of the radicals can be precisely controlled. Furthermore, the gaseous source material and the radicals can be uniformly applied to the base material; hence, a uniform film can be formed on the base material or the base material can be uniformly processed.

### Brief Description of the Drawings

[Fig. 1] Fig. 1 is a schematic view of a producing apparatus according to a first example.
[Fig. 2] Fig. 2 is a schematic view of a producing apparatus according to a second example.
[Fig. 3] Fig. 3 is a schematic view of a modification of the producing apparatus of the second example.
[Fig. 4] Fig. 4 is a schematic view of another modification of the producing apparatus of the second example.
[Fig. 5] Fig. 5 is a schematic view of another modification of the producing apparatus of the second example.
[Fig. 6] Fig. 6 is a schematic view of a producing apparatus according to a third example.
[Fig. 7] Fig. 7 is a SEM image of nanostructures, produced in Experiment 1 (an input RF electric power of 50 W), observed from above.
[Fig. 8] Fig. 8 is a SEM image of nanostructures, produced in Experiment 2 (an input RF electric power of 100 W), observed from above.
[Fig. 9] Fig. 9 is a SEM image of nanostructures, produced in Experiment 3 (an input RF electric power of 200 W), observed from above.
[Fig. 10] Fig. 10 is a SEM image of nanostructures, produced in Experiment 4 (an input RF electric power of 400 W), observed from above.
[Fig. 11] Fig. 11 is a SEM image of the nanostructures, produced in Experiment 1, observed in cross section.
[Fig. 12] Fig. 12 is a SEM image of the nanostructures, produced in Experiment 2, observed in cross section.
[Fig. 13] Fig. 13 is a SEM image of the nanostructures, produced in Experiment 3, observed in cross section.
[Fig. 14] Fig. 14 is a SEM image of the nanostructures, produced in Experiment 4, observed in cross section.
[Fig. 15] Fig. 15 is a SEM image of the nanostructures, produced in Experiment 1, observed in cross section.
[Fig. 16] Fig. 16 is a SEM image of the nanostructures, produced in Experiment 2, observed in cross section.
[Fig. 17] Fig. 17 is a SEM image of the nanostructures, produced in Experiment 3, observed in cross section.
[Fig. 18] Fig. 18 is a SEM image of the nanostructures, produced in Experiment 4, observed in cross section.
[Fig. 19] Fig. 19 is a SEM image of the nanostructures, produced in Experiment 4, observed in cross section.
[Fig. 20] Fig. 20 is a SEM image of the nanostructures, produced in Experiment 4, observed from above.
[Fig. 21] Fig. 21 is a SEM image of nanostructures, produced in Experiment 5 (a growth time of half hour), observed from above.
[Fig. 22] Fig. 22 is a SEM image of nanostructures, produced in Experiment 6 (a growth time of one hour), observed from above.
[Fig. 23] Fig. 23 is a SEM image of nanostructures, produced in Experiment 7 (a growth time of two hours), observed from above.
[Fig. 24] Fig. 24 is a SEM image of nanostructures, produced in Experiment 8 (a growth time of three hours), observed from above.
[Fig. 25] Fig. 25 is a SEM image of the nanostructures, produced in Experiment 5, observed in cross section.
[Fig. 26] Fig. 26 is a SEM image of the nanostructures, produced in Experiment 6, observed in cross section.
[Fig. 27] Fig. 27 is a SEM image of the nanostructures, produced in Experiment 7, observed in cross section.
[Fig. 28] Fig. 28 is a SEM image of the nanostructures, produced in Experiment 8, observed in cross section.
[Fig. 29] Fig. 29 is a graph showing the growth rate of nanostructures.
[Fig. 30] Fig. 30 is a SEM image of nanostructures, produced in Experiment 9 (a C₂F₆ source gas), observed from above.
[Fig. 31] Fig. 31 is a SEM image of nanostructures, produced in Experiment 10 (a CH₄ source gas), observed from above.
[Fig. 32] Fig. 32 is a graph showing the electronic emission of the nanostructures produced in Experiment 9.
[Fig. 33] Fig. 33 is a schematic view of a system for applying high-frequency waves to a second electrode.
[Fig. 34] Fig. 34 is a schematic view of another system for applying high-frequency waves to a second electrode.
[Fig. 35] Fig. 35 includes SEM images of nanostructures produced under different growth-time conditions in Experiment 12 (a source gas containing C₂F₆).
[Fig. 36] Fig. 36 includes SEM images of nanostructures produced under different growth-time conditions in Experiment 12 (the source gas containing C₂F₆).
[Fig. 37] Fig. 37 includes SEM images of nanostructures produced under different growth-time conditions in Experiment 13 (a source gas containing CH₄).
[Fig. 38] Fig. 38 includes SEM images of nanostructures produced under different growth-time conditions in Experiment 13 (the source gas containing CH₄).
[Fig. 39] Fig. 39 includes SEM images of nanostructures produced under different growth-time conditions in Experiment 14 (a source gas containing CF₄).
[Fig. 40] Fig. 40 includes SEM images of nanostructures produced under different growth-time conditions in Experiment 14 (the source gas containing CF₄).
[Fig. 41] Fig. 41 includes SEM images of nanostructures produced under different growth-time conditions in Experiment 15 (a source gas containing CHF₃).
[Fig. 42] Fig. 42 includes SEM images of nanostructures produced under different growth-time conditions in Experiment 15 (the source gas containing CHF₃).
[Fig. 43] Fig. 43 includes SEM images of nanostructures grown for eight hours in Experiment 16 (source gases containing C₂F₆, CH₄, CF₄, or CHF₃).
[Fig. 44] Fig. 44 includes SEM images of nanostructures grown for eight hours in Experiment 17 (a stainless steel substrate or a graphite substrate).
[Fig. 45] Fig. 45 includes SEM images of nanostructures grown for eight hours in Experiment 17 (a SiO₂ substrate or a Ni substrate).
[Fig. 46] Fig. 46 includes SEM images of nanostructures grown for eight hours in Experiment 18 (a radical-generating electric power of 20, 50, or 80 W and a source gas containing C₂F₆).
[Fig. 47] Fig. 47 includes SEM images of nanostructures grown for eight hours in Experiment 18 (a radical-generating electric power of 20, 50, or 80 W and a source gas containing CH₄).
[Fig. 48] Fig. 48 includes SEM images of nanostructures grown for eight hours in Experiment 18 (a radical-generating electric power of 20, 50, or 80 W and a source gas containing C₂F₆).
[Fig. 49] Fig. 49 includes SEM images of nanostructures grown in Experiment 19 (different source gases each used in the former or latter half of a growing step).
[Fig. 50] Fig. 50 includes SEM images of nanostructures grown in Experiment 20 (the variation of the ratio of the flow rate of a source gas to that of gaseous H₂).
[Fig. 51] Fig. 51 includes SEM images of nanostructures grown in Experiment 21 (a source gas, the tilt of a line normal to a substrate with respect to an electric field, C₂F₆, and the introduction of H radicals).
[Fig. 52] Fig. 52 is an enlarged SEM image of the nanostructures shown in Fig. 51.
[Fig. 53] Fig. 53 is an enlarged SEM image of the nanostructures shown in Fig. 52.
[Fig. 54] Fig. 54 is a TEM image of carbon nanowalls, produced in Experiment 12, separated from a substrate.
[Fig. 55] Fig. 55 includes SEM images of nanostructures grown in Experiment 21 (the tilt of a substrate with respect to an RF electric field).
[Fig. 56A] Fig. 56A is a sectional view of an apparatus according to a fourth example of the present invention.
[Fig. 56B] Fig. 56B is a sectional view of a plasma-processing apparatus according to the fourth example of the present invention.
[Fig. 57] Fig. 57 is an illustration showing a planar configuration and cross-sectional configuration of a fifth electrode included in a plasma-processing apparatus according to a fifth example of the present invention.
[Fig. 58] Fig. 58 is a graph showing the relationship between the electric power required to produce H radicals and the density of hydrogen atoms in a reaction region, the electric power and the density being measured in Experiment 18.

### Reference Numerals

1, 2, 3, 4, 6, and 7 carbon nanowall-producing apparatuses
5 substrate
10 reaction chamber
14 radical-introducing port
20 plasma discharger
22 first electrode
24 second electrode

### Best Mode for Carrying Out the Invention

Preferred embodiments of the present invention will now be described. Technical matters, other than those specified herein, necessary for carrying out the present invention are incorporated herein by reference if the technical matters are known to those skilled in the art. The present invention can be carried out on the basis of the technical matters specified herein and techniques known to those skilled in the art.

Various types of source material containing carbon can be used to produce carbon nanowalls. An element contained in such a source material is at least one selected from the group consisting of hydrogen, fluorine, chlorine, bromine, nitrogen, and oxygen in addition to carbon. Examples of the source material include compounds containing carbon and hydrogen; compounds containing carbon and fluorine; and compounds containing carbon, hydrogen, and fluorine. Preferable examples of the source material include saturated or unsaturated hydrocarbons (for example, CH₄), fluorocarbons (for example, C₂F₆), and fluorohydrocarbons (for example, CHF₃). These compounds may be linear, branched, or cyclic. The source material (source gas) is preferably gaseous at normal temperature and pressure. These compounds may be used alone or in combination. The type (composition) of the source material used may be unvaried during the production (growth) of the carbon nanowalls or may be varied depending on producing steps. The type (composition) of the source material and a method for feeding the source material may be selected depending on properties (for example, the thickness) and/or characteristics (for example, electrical characteristics) of the carbon nanostructures.

A radical source used is preferably a compound containing hydrogen. The radical source (a radical source gas) is preferably gaseous at normal temperature and pressure. The radical source is preferably gaseous hydrogen (H₂). Alternatively, the radical source may be a decomposable compound, such as a hydrocarbon (CH₄ or the like), generating radicals. The radical source may be used alone or in combination with another radical source in any mixing ratio.

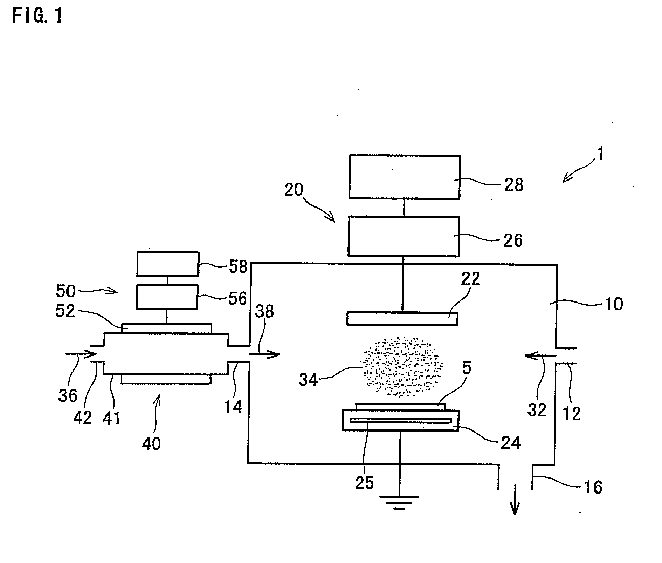

In a method for producing the carbon nanowalls according to the present invention, radicals are introduced into an atmosphere containing a plasma generated from the source material, whereby the radicals (H radicals in particular) are mixed with the plasma. The atmosphere contains a large amount of the radicals (H radicals). Carbon is deposited on a base material from the mixture, whereby the carbon nanowalls are formed (grown). Examples of the base material include base materials having regions containing Si, SiO₂, Si₃N₄, GaAs, or Al₂O₃. The base material may be made of at least one of these materials. According to the method, the carbon nanowalls can be formed directly on the base material without using any nickel-iron catalyst or another catalyst. However, a catalyst containing Ni, Fe, Co, Pd, or Pt (a transition metal in particular) may be used. The carbon nanowalls may be produced in such a manner that, for example, a thin film (a thickness of about 1 to 10 nm) of the metal is formed on the base material and the carbon nanowalls are formed on the thin film. The shape of the base material is not particularly limited. The base material (substrate) may be, for example, tabular. [First Example] Fig. 1 shows a configuration of an apparatus for producing carbon nanowalls (carbon nanostructures) according to the present invention. The apparatus 1 includes a reaction chamber 10, a plasma discharger 20 for generating a plasma in the reaction chamber 10, and a radical supply unit 40 connected to the reaction chamber 10.

The plasma discharger 20 is a parallel plate-type capacitively coupled plasma (CCP) generator. The plasma discharger 20 includes a first electrode 22 and second electrode 24 that have substantially a disc shape. The first and second electrodes 22 and 24 are arranged in the reaction chamber 10 in parallel with each other. Typically, the first electrode 22 is disposed above the second electrode 24. The first electrode (cathode) 22 is connected to a power supply 28 with a matching network 26. At least one of the following types of waves can be generated using the power supply 28 and the matching network 26: RF waves (a frequency of, for example, 13.56 MHz), UHF waves (a frequency of, for example, 500 MHz), VHF waves (a frequency of, for example, 27, 40, 60, 100, or 150 MHz), and microwaves (a frequency of, for example, 2.45 MHz). In this example, the RF waves are generated. The second electrode (anode) 24 is spaced from the first electrode 22 in the reaction chamber 10. The distance between the first and second electrodes 22 and 24 may be, for example, 0.5 to 10 cm. In this example, the distance between the first and second electrodes 22 and 24 is about 5 cm. The second electrode 24 is grounded. A substrate 5 (base material) is placed on the second electrode 24 during the production of the carbon nanowalls. In particular, the substrate 5 is placed on the second electrode 24 such that a face of the substrate 5 on which the carbon nanowalls are formed is exposed (the face thereof is opposed to the first electrode 22). The second electrode 24 includes a heater (for example, a carbon heater) 25, disposed therein, for adjusting the temperature of the substrate 5. The temperature of the substrate 5 can be adjusted by operating the heater 25 as required.

The reaction chamber 10 includes a source material-introducing port 12 for feeding a source material (source gas) from a supply source which is not shown. The source material-introducing port 12 is preferably located such that the source gas is fed between the first electrode (upper electrode) 22 and the second electrode (lower electrode) 24. The reaction chamber 10 further includes a radical-introducing port 14 for feeding radicals from the radical supply unit 40. The radical-introducing port 14 is preferably located such that the source gas is fed between the first and second electrodes 22 and 24. The reaction chamber 10 further includes an exhaust vent 16. The exhaust vent 16 serves as a pressure-adjusting section (pressure-reducing section) for adjusting the pressure in the reaction chamber 10 and is connected to a vacuum pump, which is not shown, or the like. The exhaust vent 16 is preferably disposed below the second electrode 24.

The radical supply unit 40 includes a radical-generating chamber 41 and a radical generator 50 for generating the radicals from a radical source in the radical-generating chamber 41. The radical generator 50 is a type of inductively coupled plasma (ICP) generator. A coil 52 is spirally wound around the radical-generating chamber 41. In this example, the radical-generating chamber 41 is a quartz tube having a diameter of 26 mm and a length of 20 mm and the coil 52 is made of five turns of a 1/4-inch copper tube. The coil 52 can be cooled with running water or the like. The radical generator 50 (the coil 52) is connected to a power supply 58 with a matching network 56. At least one of the following types waves can be generated using the power supply 58 and the matching network 56: RF waves (a frequency of 13.56 MHz), UHF waves (a frequency of, for example, 500 MHz), and VHF waves (a frequency of, for example, 100 MHz). In this example, the RF waves are generated. Alternatively, microwaves (a frequency of, for example, 2.45 MHz) may be introduced into the radical generator 50 such that a plasma for generating the radicals is generated. In this case, the coil 52 may be omitted.

The radical-generating chamber 41 includes a radical source-introducing port 42 for feeding the radical source 36 from a supply source which is not shown. The radical-generating chamber 41 is connected to the radical-introducing port 14 of the reaction chamber 10. It is preferable that the radical source-introducing port 42 be located at one end of the radical-generating chamber 41 having a tubular shape, the other end be connected to the radical-introducing port 14 of the reaction chamber 10, and the coil 52 be disposed therebetween. In this example, the radical-generating chamber 41 is disposed beside the reaction chamber 10; however, the position of the radical-generating chamber 41 is not limited to the side of the reaction chamber 10. The radical-generating chamber 41 may be disposed above or below the reaction chamber. Alternatively, the radical-generating chamber 41 may be disposed (stored) in the reaction chamber.

The carbon nanowalls can be produced using the apparatus 1 having the above configuration as described below. The substrate 5 is set on the second electrode 24 and a source material (source gas) 32 is then fed into the reaction chamber 10 through the source material-introducing port 12 at a predetermined feed rate. The gaseous radical source (radical source gas) 36 is fed into the radical-generating chamber 41 through the radical source-introducing port 42 at a predetermined feed rate. The vacuum pump connected to the exhaust vent 16 is operated, whereby the pressure (the sum of the partial pressure of the source gas and that of the radical source gas) in the reaction chamber 10 is adjusted to about 10 to 1000 mTorr. The ratio of the feed rate of the source gas and that of the radical source gas may be varied depending on the type (composition) of these gases and desired properties and/or characteristics of the carbon nanowalls. When the source gas is a hydrocarbon or fluorocarbon with one to three carbon atoms and the radical source gas is hydrogen, the ratio of the feed rate of the source gas and that of the radical source gas may range from 2 : 98 to 60 : 40 (the temperatures of the gases are substantially the same). This ratio preferably ranges from 5 : 95 to 50 : 50 and more preferably 10 : 90 to 30 : 70.

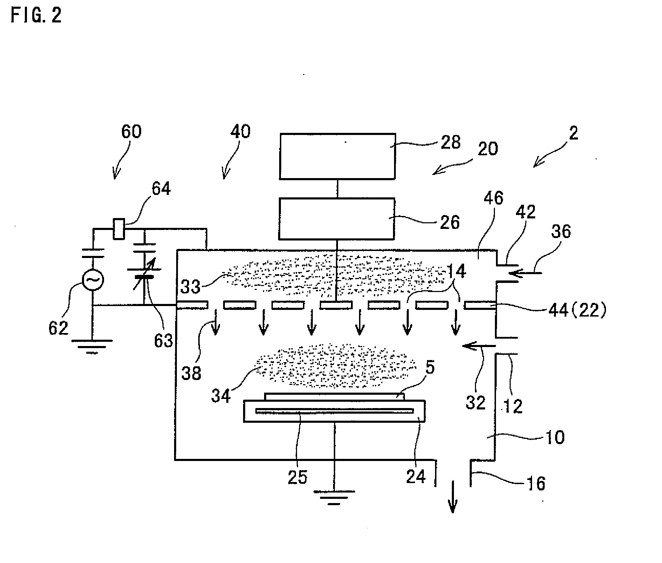

A 5 W to 2 kW RF electric power with a frequency of, for example, 13.56 MHz is supplied from the power supply 28 to the first electrode 22. This allows the source gas 32 to be plasmatized between the first and second electrodes 22 and 24, whereby a plasma atmosphere 34 is created. A 10 to 1000 kW RF electric power with a frequency of, for example, 13.56 MHz is then supplied from the power supply 58 to the radical generator 50. This allows the radical source gas 36 to be decomposed, whereby the radicals 38 are generated. The generated radicals 38 are introduced into the reaction chamber 10 through the radical-introducing port 14, whereby the radicals 38 are introduced into the plasma atmosphere 34. This allows the radicals 38 to be present in the plasma atmosphere 34. This results in the growth of the carbon nanowalls on the substrate 5 disposed on the second electrode 24. In this operation, the substrate 5 is preferably maintained at about 100 to 800°C (more preferably about 200°C to 600°C) with the heater 25. [Second Example] An apparatus according to a second example is different from the apparatus according to the first example in that a radical supply unit included in the apparatus of the second example has a configuration different from that of the radical supply unit included in the apparatus of the first example. In this example, in order to omit or simplify the description, members having the same functions as those of the members described in the first example have the same reference numerals as those of the members described in the first example. With reference to Fig. 2, the radical supply unit 40 included in the apparatus 2 of this example includes a plasma-generating chamber 46 disposed above a reaction chamber 10. The plasma-generating chamber 46 is separated from the reaction chamber 10 with a partition 44 opposed to a face of a substrate 5 on which carbon nanowalls are formed. The partition 44 is connected to a power supply 28 with a matching network 26. In this example, the partition 44 has the same function as that of the first electrode 22 described in the first example. The apparatus 2 further includes a high-frequency wave-applying unit 60 for applying RF waves, VHF waves, or UHF waves to a region between the partition 44 and a wall of the plasma-generating chamber 46. This allows a plasma 33 to be generated from a radical source gas 36. In the high-frequency wave-applying unit 60 shown in Fig. 2, reference numeral 62 represents an alternating current power supply, reference numeral 63 represents a bias power supply, and reference numeral 64 represents a filter. Ions in the plasma 33 are neutralized with the partition 44, whereby radicals 38 are generated. In this operation, an electric field may be applied to the partition 44 such that the degree of neutralization is increased. Alternatively, energy may be applied to the neutral radicals. The partition 44 has a large number of distributed perforations. The perforations serve as radical-introducing ports 14; hence, the radicals 38 are introduced into the reaction chamber 10 through the perforations to migrate in a plasma atmosphere 34. As shown in this figure, the radical-introducing ports 14 are arranged along the upper face (a face opposed to the first electrode 22, that is, a face on which the carbon nanowalls are formed) of the substrate 5 such that the radical-introducing port 14 open on the upper face thereof. Since the apparatus 2 has the above configuration, the radicals 38 can be uniformly introduced into the reaction chamber 10. This allows the carbon nanowalls to be efficiently formed on a large region (area) of the substrate 5. Furthermore, the carbon nanowalls formed on potions arranged in the face have uniform structures (properties, characteristics, and/or the like). This example provides one or more of these advantages.

The partition 44 may be coated with a material, such as Pt, having catalytic activity or made of such a material. An electric field is applied between the partition 44 and the plasma atmosphere 34 (in particular, a negative electric field is applied to the partition 44), whereby ions in the plasma atmosphere 34 are accelerated such that the partition 44 is sputtered with the ions. This allows catalytic atoms (Pt atoms or the like) or clusters having catalytic activity to be introduced into the plasma atmosphere 34. In a process for forming the carbon nanowalls, the following active species are used: the radicals 38 (typically H radicals) fed from the plasma-generating chamber 46, carbon radicals and/or ions generated in the plasma atmosphere 34, and the catalytic atoms or clusters generated by sputtering the partition 44. Therefore, the catalytic atoms or the catalytic clusters can be deposited in and/or on the carbon nanowalls. Since the carbon nanowalls have the catalytic atoms or the catalytic clusters and thus exhibit high catalytic activity, the carbon nanowalls can be used to produce electrodes for fuel cells.

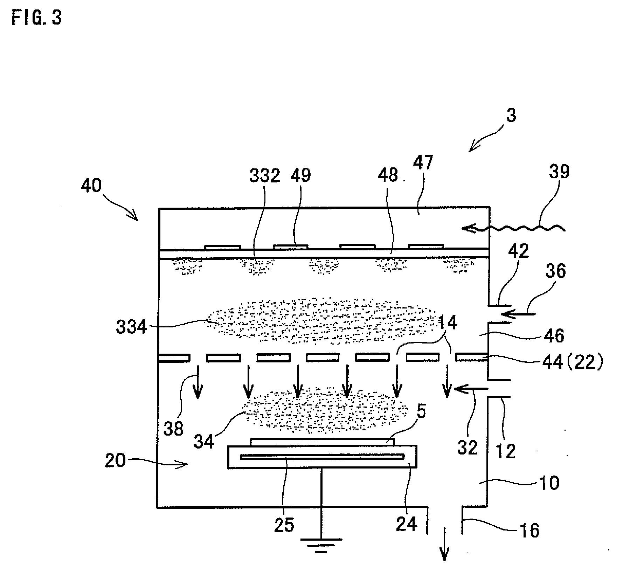

In the apparatus 2 shown in Fig. 2, the plasma 33 is generated from the radical source 36 using the high-frequency waves; however, the plasma 33 may be generated using microwaves. For example, an apparatus 3 shown in Fig. 3 may be used. This apparatus 3 includes a plasma-generating chamber 46 and a waveguide 47, disposed above this plasma-generating chamber 46, for guiding microwaves 39. The microwaves are introduced into this plasma-generating chamber 46 through quartz windows 48 using slot antennas 49, whereby a high-density plasma 332 is generated. The high-density plasma 332 is diffused in this plasma-generating chamber 46 (a plasma 334), whereby radicals 38 are generated. In Fig. 3, some parts of a plasma discharger 20 are omitted. A bias voltage may be applied to a partition 44 shown in Fig. 3. The bias voltage is applied between, for example, this partition 44 and this plasma 334 or a plasma atmosphere 34 in this plasma-generating chamber 46. The direction of the bias voltage may be varied. The bias voltage is preferably negative.

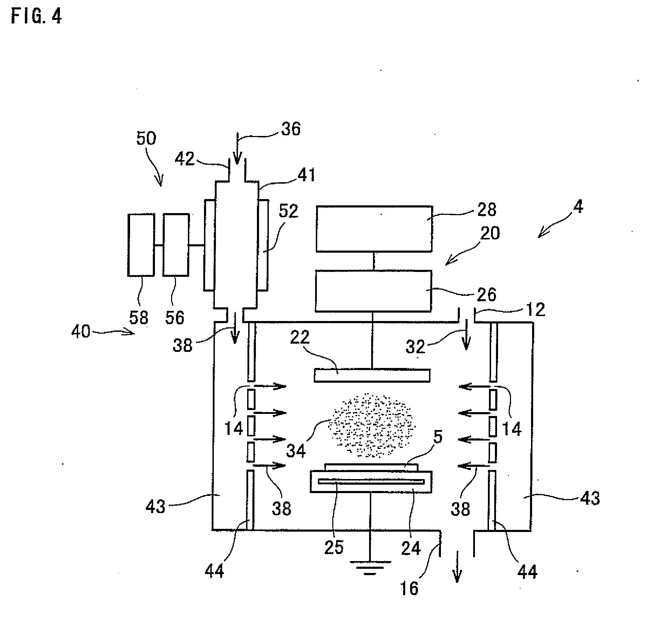

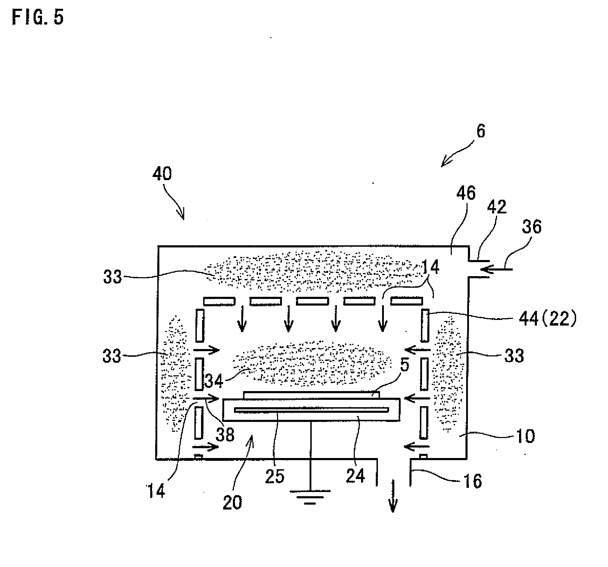

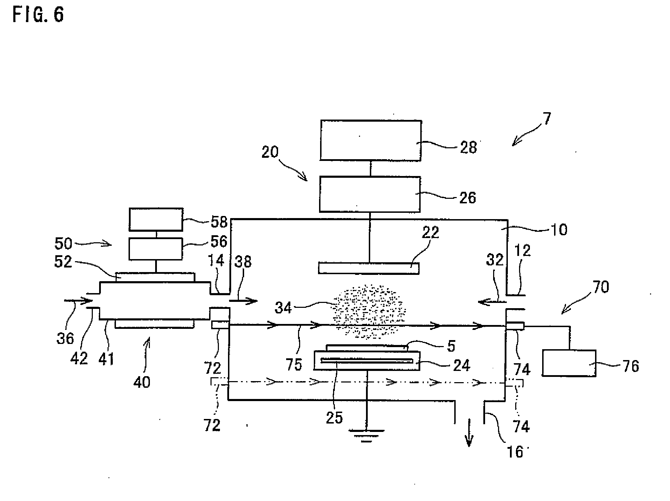

Fig. 4 shows a configuration of an apparatus including radical-introducing ports 14 opening on a face for forming carbon nanowalls. This apparatus 4 includes a radical supply unit 40 including a radical-generating chamber 41 and a radical diffusion chamber 43 into which radicals 38 generated in this radical-generating chamber 41 are introduced. The radical diffusion chamber 43 is tubular and extends around a reaction chamber 10, with a partition 44 disposed therebetween. These radical-introducing ports 14 are arranged in portions of this partition 44 (that is, these radical-introducing ports 14 open on a base material 5). These radicals 38 are introduced into this reaction chamber 10 through these radical-introducing ports 14. Alternatively, an apparatus 6 shown in Fig. 5 may be used. This apparatus 6 includes a reaction chamber 10 and a plasma-generating chamber 46 different from that included in the apparatus 2 (shown in Fig. 2). This plasma-generating chamber 46 extends along the upper wall and side walls of this reaction chamber 10. According to this configuration, radicals 38 can be introduced into a plasma atmosphere 34 from a wide surrounding space (a space surrounded by the upper wall and side walls). In Fig. 5, a high-frequency wave-applying unit 60 and parts of a plasma discharger 20 are omitted. These apparatuses 4 and 6 (shown in Figs. 4 and 5, respectively), as well as the apparatus 3 shown in Fig. 3, each include a partition 44 to which a bias voltage can be applied. In this apparatus 6, this partition 44 may be located in an upper region or side region of this reaction chamber 10.
[Third Example] A third example provides an apparatus, similar to the apparatus of the first example, including a radical concentration-measuring unit. In this example, in order to omit or simplify the description, members having the same functions as those of the members described in the first example have the same reference numerals as those of the members described in the first example. With reference to Fig. 6, the apparatus 7 of this example includes a reaction chamber 10 and the radical concentration-measuring unit 70 for measuring the concentration of C radicals (carbon radicals) in this reaction chamber 10. The radical concentration-measuring unit 70 includes a light emitter 72 for emitting an emission line 75 (an emission line at a wavelength of, for example, 296.7 nm) characteristic of carbon atoms (carbon radicals) into this reaction chamber 10 and a light detector 74 for receiving (detecting) the emission line 75. The emission line 75 emitted from the light emitter 72 passes between a first electrode 22 and a second electrode 24 to travel to the light detector 74. Alternatively, the emission line 75 may pass through a region in this reaction chamber 10 to travel to the light detector 74. In particular, as imaginarily indicated by a broken line shown in Fig. 6, the emission line 75 may pass through a region (located close to an exhaust vent 16) under this second electrode 24 to travel to the light detector 74.

The emission line 75 is partly absorbed by the carbon radicals (carbon atoms) present between these first and second electrodes 22 and 24 depending on the concentration thereof. Hence, the concentration (density) of the carbon radicals can be determined from a difference between the intensity of the emission line 75 detected by the light detector 74 in the presence of the carbon radicals and that of the emission line 75 detected by the light detector 74 in the absence of the carbon radicals. If conditions for producing carbon nanowalls are controlled such that the detected intensity of the emission line 75 is maintained constant during the production thereof, the concentration of the carbon radicals can be prevented from fluctuating. The concentration of the carbon radicals in this reaction chamber 10 and/or other production conditions can be properly controlled by monitoring the concentration of the carbon radicals. In particular, the feed rate of a source gas 32 can be controlled in such a manner that a signal related to the radical concentration determined by the light detector 74 is transmitted to a control circuit 76 connected to an adjuster (for example, an solenoid valve), not shown, for controlling the feed rate of the source gas and the intensity of the signal is controlled within a predetermined range. The carbon nanowalls, which have desired properties and/or characteristics, can be efficiently produced by controlling production conditions using the concentration of the carbon radicals in this reaction chamber 10. One or more of the following advantages can be achieved: for example, an increase in the yield of the carbon nanowalls, an improvement in the configuration (property) accuracy thereof, an improvement in the reproducibility of configurations (properties) thereof, a reduction in the consumption of a source gas and/or a radical source gas, and the simplification of the control of production conditions.

This apparatus 7 may include a radical concentration-measuring unit 70 for measuring the concentration of H radicals (hydrogen atoms) in this reaction chamber 10. This radical concentration-measuring unit 70 includes a light emitter 72 for emitting an emission line 75 characteristic of hydrogen atoms (H radicals) and a light detector 74 for detecting this emission line 75. Alternatively, this apparatus 7 may include a radical concentration-measuring unit 70, including a light emitter 72 for emitting an emission line 75 characteristic of fluorine atoms (fluorine radicals) and a light detector 74 for detecting this emission line 75, for measuring the concentration of F radicals (fluorine atoms) in this reaction chamber 10. This apparatus 7 may include a radical concentration-measuring unit 70, as well as those described above, for measuring the concentration of C₂ radicals. As described above, this apparatus 7 includes at least one of the radical concentration-measuring units 70 including the light emitters 72 for emitting the emission lines 75 corresponding to the types of the measured radicals and the light detectors 74 for detecting the emission lines 75. This apparatus 7 may include a measuring unit that can measure the concentration of radicals of at least one selected from the group consisting of C, C₂, H, F, CF₃, CF₂, and CF. This apparatus 7 may include a plurality of measuring units that can measure the concentrations of two or more types of the radicals.

This apparatus 7 may include a radical concentration-measuring unit, including a light emitter for emitting an emission line characteristic of hydrogen atoms (H radicals) and a light detector for detecting this emission line, for measuring the concentration of H radicals in a radical-generating chamber 41. Alternatively, this apparatus 7 may include a H-radical concentration-measuring unit for measuring the concentration of H radicals in a plasma-generating chamber 46 or a radical diffusion chamber 43.

The following experiments will now be described: experiments for producing carbon nanostructures using the above apparatus 1 and experiments for evaluating characteristics of the carbon nanostructures obtained. [Experiment 1] In this experiment, a source gas 32 used was C₂F₆. A radical source gas 36 used was hydrogen (H₂). A substrate 5 used was a silicon (Si) substrate with a thickness of about 0.5 mm. The silicon substrate 5 contained substantially no catalyst (metal catalyst or the like). The silicon substrate 5 was set on the second electrode 24 such that the (100) plane of the silicon substrate 5 is opposed to the first electrode 22. The C₂F₆ (source gas) 32 was fed to the reaction chamber 10 through the radical source-introducing port 42 and the hydrogen gas (radical source gas) 36 was fed to the radical-generating chamber 40 through the radical source-introducing port 42. Gas was evacuated from the reaction chamber 10 through the exhaust vent 16. The feed rates (flow rates) of the source gas 32 and the radical source gas 36 and evacuation conditions were adjusted such that the partial pressure of C₂F₆ in the reaction chamber 10 was about 20 mTorr, the partial pressure of H₂ therein was about 80 mTorr, and the total pressure therein was about 100 mTorr. While the source gas 32 was being fed to the reaction chamber 10 under these conditions, RF waves were applied to the source gas (C₂F₆) 32 in the reaction chamber 10 by applying a 100 W RF electric power with a frequency of 13.56 MHz to the first electrode 22 from the power supply 28. This allowed the source gas 32 to be plasmatized to generate a plasma atmosphere 34 between the first and second electrodes 22 and 24. Furthermore, while the radical source gas 36 was being fed to the radical-generating chamber 41 under these conditions, RF waves were applied to the radical source gas (H₂) 36 in the radical-generating chamber 41 by applying a 50 W RF electric power with a frequency of 13.56 MHz to the coil 52 from the power supply 58. This generated H radicals, which were introduced into the reaction chamber 10 through the radical-introducing port 14. The carbon nanostructures were grown (deposited) on the (100) plane of the silicon substrate 5. In this example, the time to grow the nanostructures was two hours. The temperature of the substrate 5 was maintained at about 500°C with the heater 25 and a cooling unit which is not shown.
[Experiments 2 to 4] In these experiments, conditions for generating radicals (H radicals) 38 are different from those of Experiment 1. That is, the RF electric power applied to the coil 52 from the power supply 58 is 100 W (Experiment 2), 200 W (Experiment 3), or 400 W (Experiment 4). Carbon nanostructures were formed on the (100) plane of each substrate 5 under substantially the same conditions as those of Experiment 1 except the magnitude of the RF electric power. Table 1 summarizes the conditions of the experiments. The term "pressure ratio" means the ratio of the partial pressure of the source gas to that of the radical source gas (that is, the ratio of the feed rates), these gases being fed to the apparatus.

**[Table 1]**

| | Experiment 1 | Experiment 2 | Experiment 3 | Experiment 4 |
|---|---|---|---|---|
| Source gas | C₂F₆ | C₂F₆ | C₂F₆ | C₂F₆ |
| Radical source gas | H₂ | H₂ | H₂ | H₂ |
| Pressure ratio (C₂F₆ / H₂) | 20 / 80 | 20 / 80 | 20 / 80 | 20 / 80 |
| Electric power applied to reaction chamber | 100 W | 100 W | 100 W | 100 W |
| Electric power applied to radical-generating chamber | 50 W | 100 W | 200 W | 400 W |
| Substrate temperature | 500°C | 500°C | 500°C | 500°C |
| Growth time | Two hours | Two hours | Two hours | Two hours |

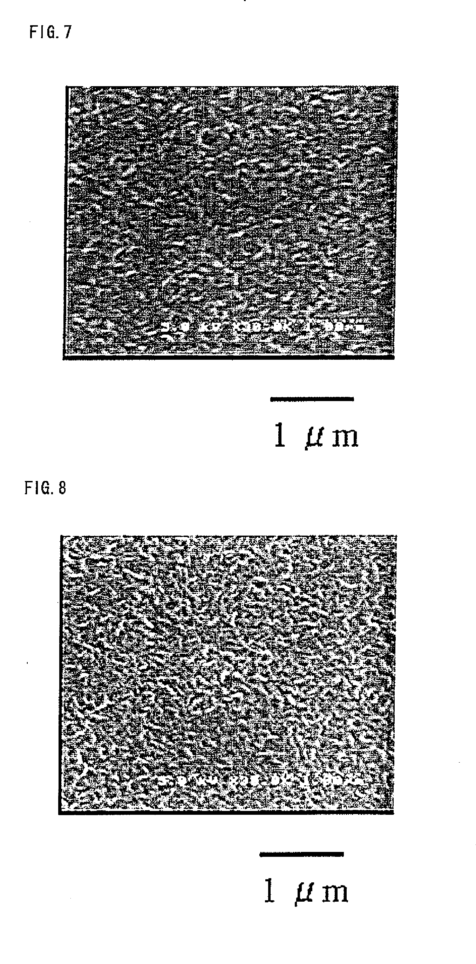

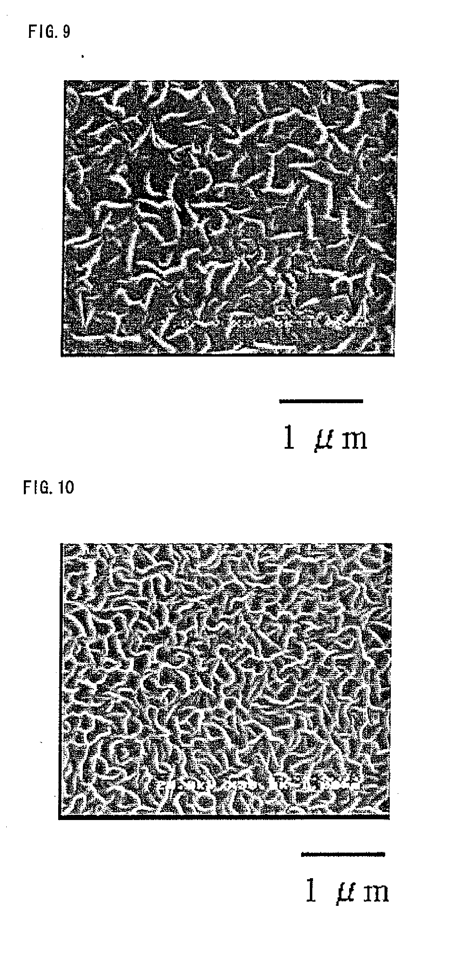

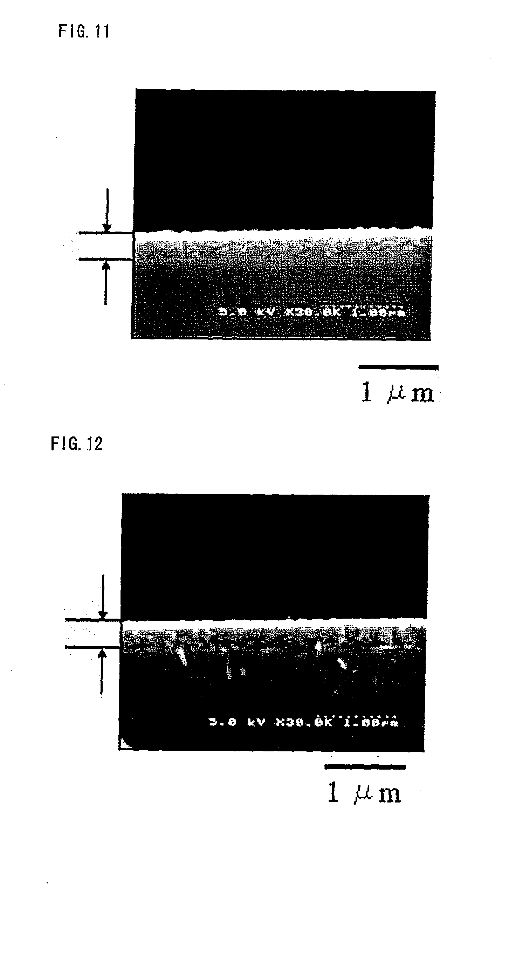

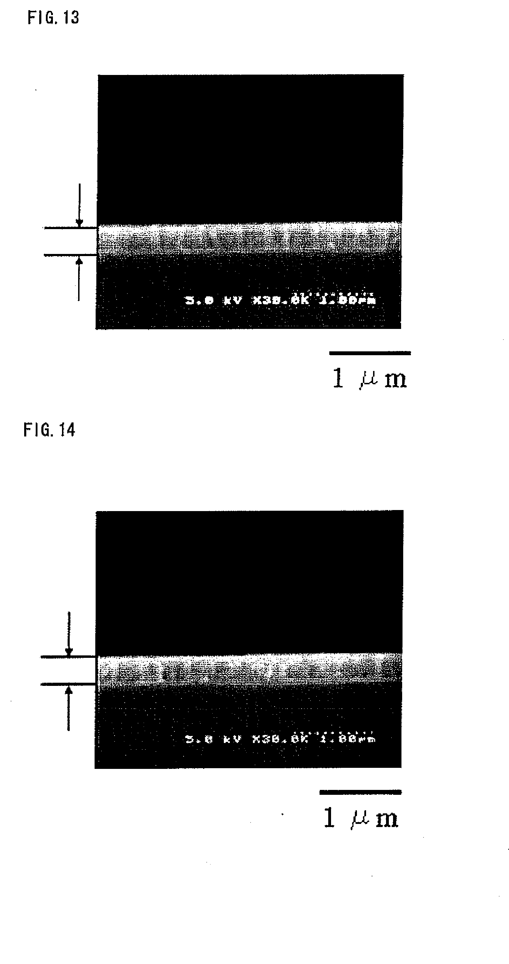

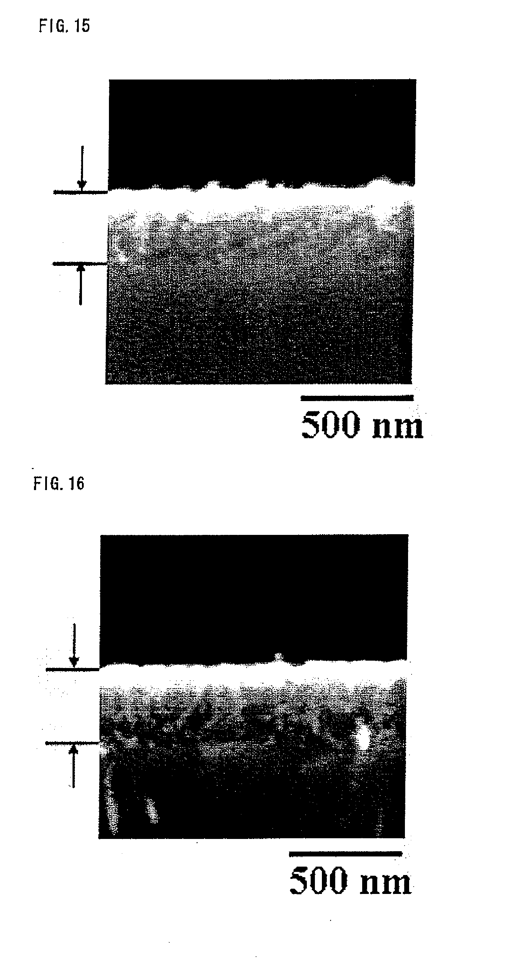

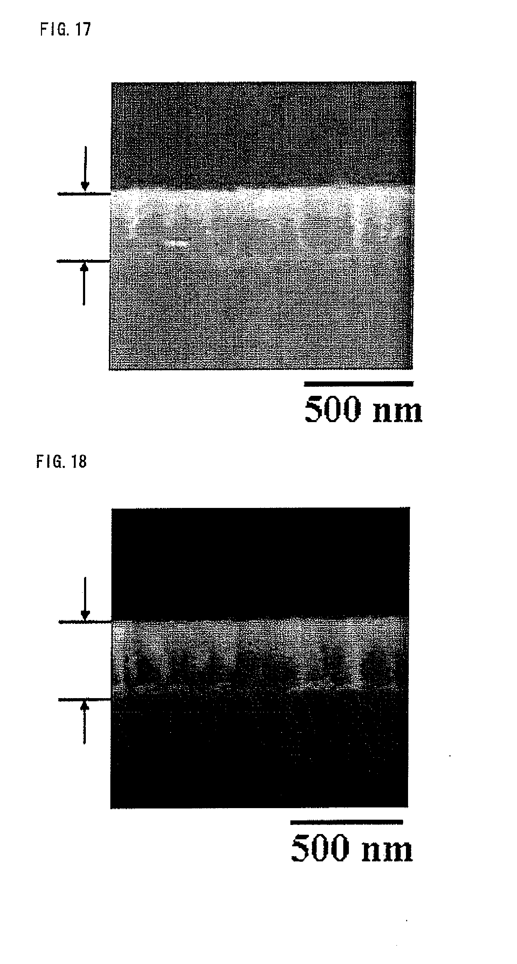

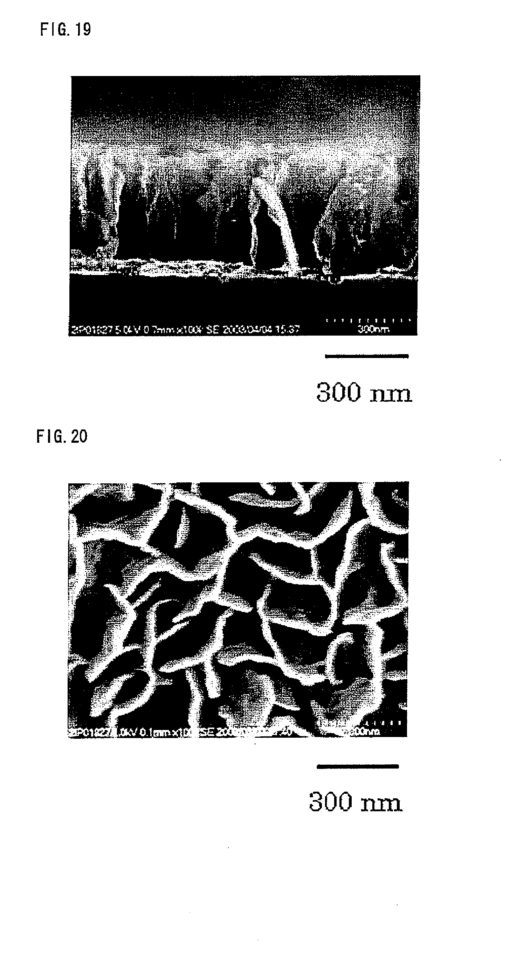

The nanostructures produced in Experiments 1 to 4 were observed by scanning electron microscopy (SEM). Figs. 7 to 10 are SEM images of the nanostructures viewed from above. Figs. 11 to 14 are SEM images of the nanostructures observed in cross section. Figs. 15 to 18 are SEM images of the nanostructures observed at high magnification. Fig. 19 is a SEM image of the nanostructures, produced in Experiment 4, observed in cross section at higher magnification than that of Fig. 18. Fig. 20 is a SEM image of the nanostructures, produced in Experiment 4, observed from above at higher magnification than that of Fig. 10. According to Experiments 1 to 4, as is clear from these figures, two-dimensional carbon sheets (carbon nanowalls) are arranged substantially perpendicularly to the (100) plane of each substrate 5. The average thickness of the carbon nanowalls (the average thickness of the carbon sheets) was about 10 to 30 nm. The carbon nanowalls produced in these experiments have different configurations (properties) depending on the H radical-generating condition (the magnitude of the RF electric power applied to the coil 52 to the power supply 58). The carbon nanowalls produced in Experiments 1 to 4 have slightly different heights without depending on the H radical-generating condition. That is, the carbon nanowalls produced in these experiments have an average height of about 300 nm. These results suggest that configurations of the carbon nanowalls can be controlled by varying the amount of the generated H radicals (the amount of the H radicals fed to the reaction chamber 10).
[Experiments 5 to 8] Carbon nanostructures were formed on the (100) plane of each substrate 5 under substantially the same conditions as those of Experiment 4 except that the time to grow the nanostructures on the substrate was half hour (Experiment 5), one hour (Experiment 6), two hours (Experiment 7), or three hours (Experiment 8). Table 2 summarizes the conditions of the experiments. The conditions of Experiment 7 are substantially the same as those of Experiment 4.

**[Table 2]**

| | Experiment 5 | Experiment 6 | Experiment 7 | Experiment 8 |
|---|---|---|---|---|
| Source gas | C₂F₆ | C₂F₆ | C₂F₆ | C₂F₆ |
| Radical source gas | H₂ | H₂ | H₂ | H₂ |
| Pressure ratio (C₂F₆ / H₂) | 20 / 80 | 20 / 80 | 20 / 80 | 20 / 80 |
| Electric power applied to reaction chamber | 100 W | 100 W | 100 W | 100 W |
| Electric power applied to radical-generating chamber | 400 W | 400 W | 400 W | 400 W |
| Substrate temperature | 500°C | 500°C | 500°C | 500°C |
| Growth time | Half hour | One hour | Two hours | Three hours |

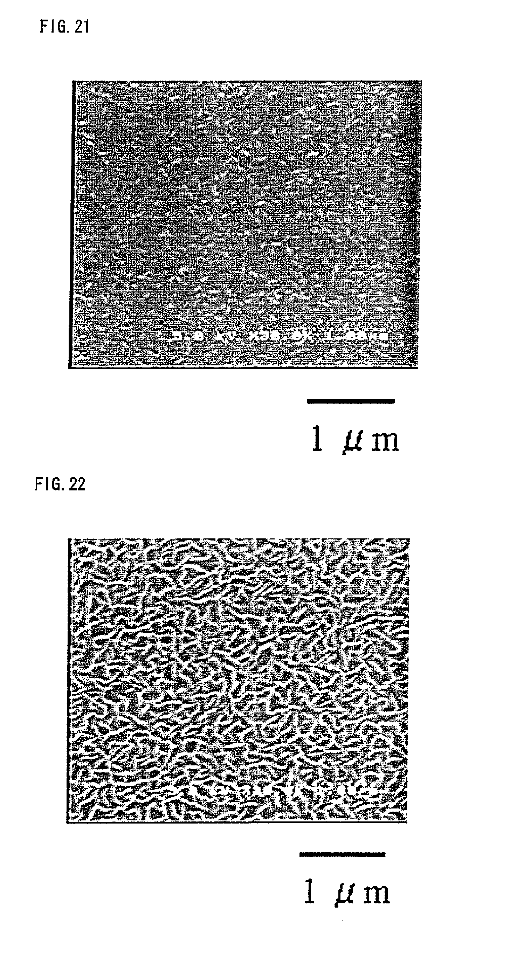

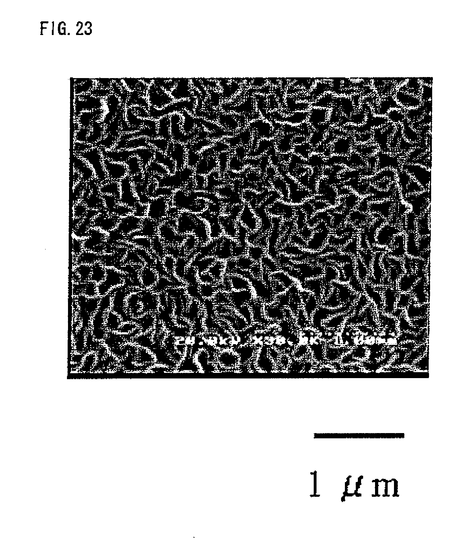

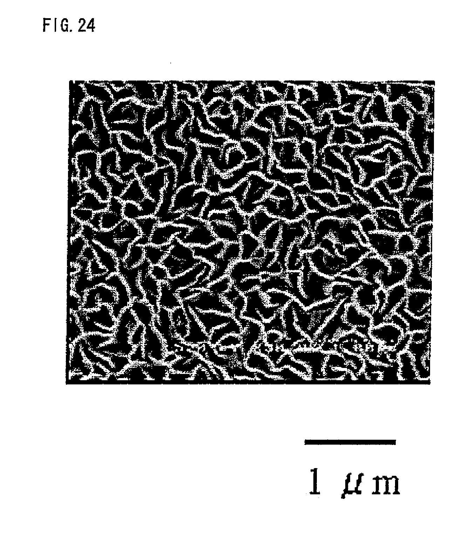

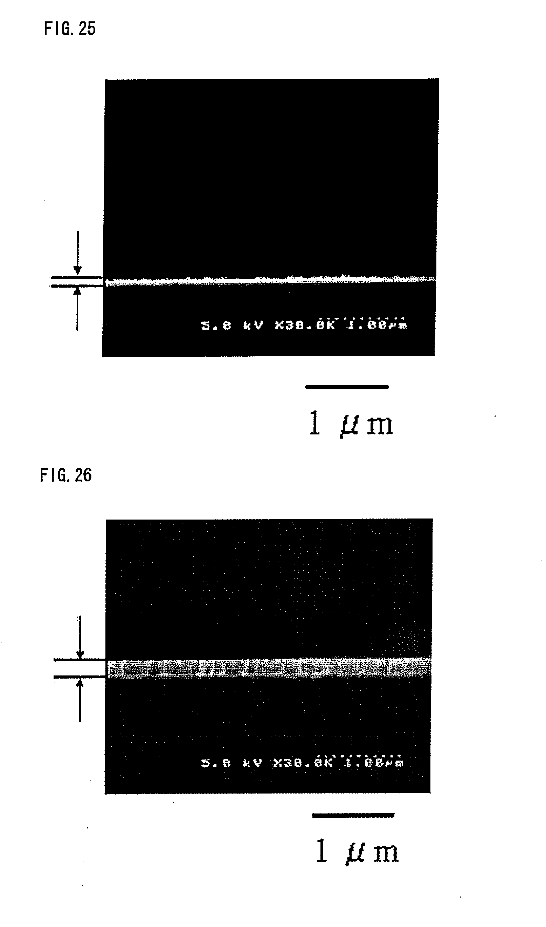

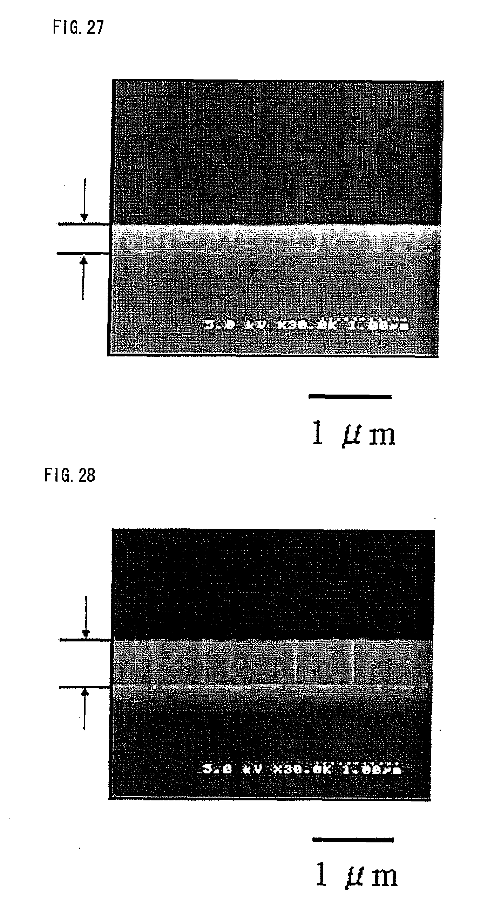

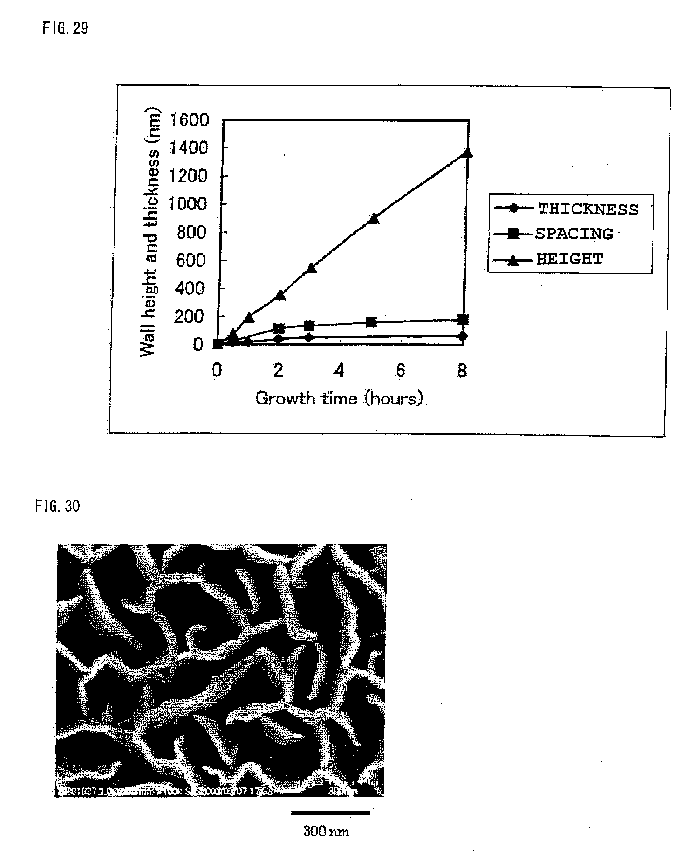

The nanostructures produced in Experiments 5 to 7 were observed by scanning electron microscopy (SEM). Figs. 21 to 24 are SEM images of the nanostructures viewed from above. Figs. 25 to 28 are SEM images of the nanostructures observed in cross section. As is clear from these figures, the nanostructures formed on the substrates 5 have different properties depending on the growth time. As is clear from Figs. 25 to 28, the heights of the nanostructures increase with an increase in growth time. As shown in Fig. 29, there is arbitrarily a linear correlation (proportional correlation) between the growth time and the height of the nanostructures produced under the conditions of Experiments 5 to 8. [Experiments 9 and 10] Carbon nanostructures were formed on the (100) plane of each substrate 5 under substantially the same conditions as those of Experiment 4 except that a source gas 32 used was C₂F₆ (Experiment 9) or CH₄ (Experiment 10). Table 3 summarizes conditions of these experiments. The conditions of Experiment 9 are substantially the same as those of Experiment 4.

**[Table 3]**

| | Experiment 9 | Experiment 10 |
|---|---|---|
| Source gas | C₂F₆ | CH₄ |
| Radical source gas | H₂ | H₂ |
| Pressure ratio (C₂F₆/H₂ or CH₄/H₂) | 20 / 80 | 20 / 80 |
| Electric power applied to reaction chamber | 100 W | 100 W |
| Electric power applied to radical-generating chamber | 400 W | 400 W |
| Substrate temperature | 500°C | 500°C |
| Growth time | Two hours | One hour |

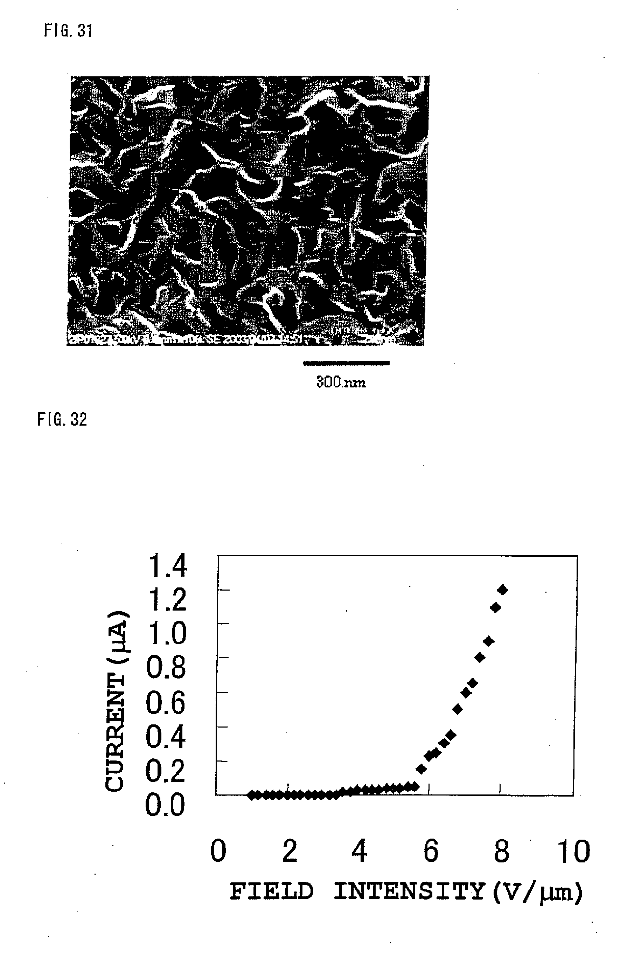

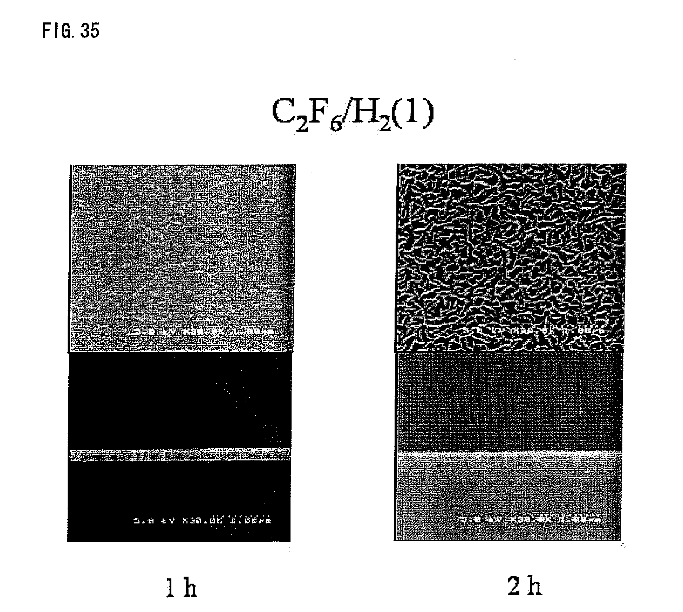

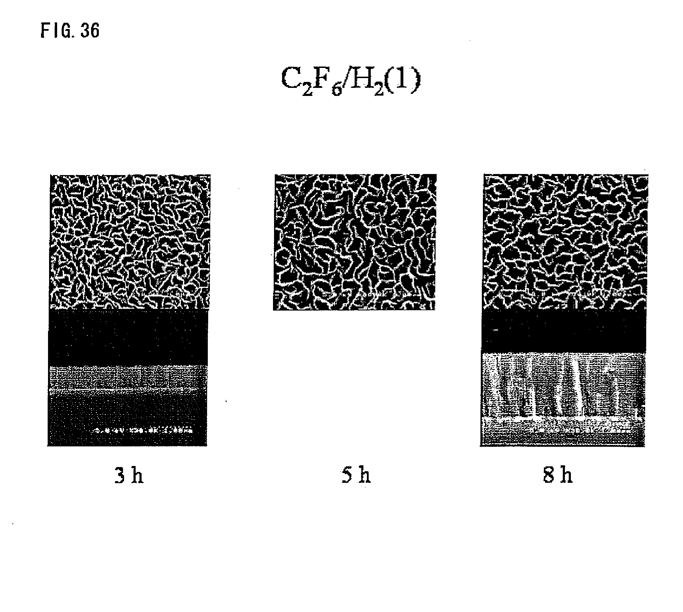

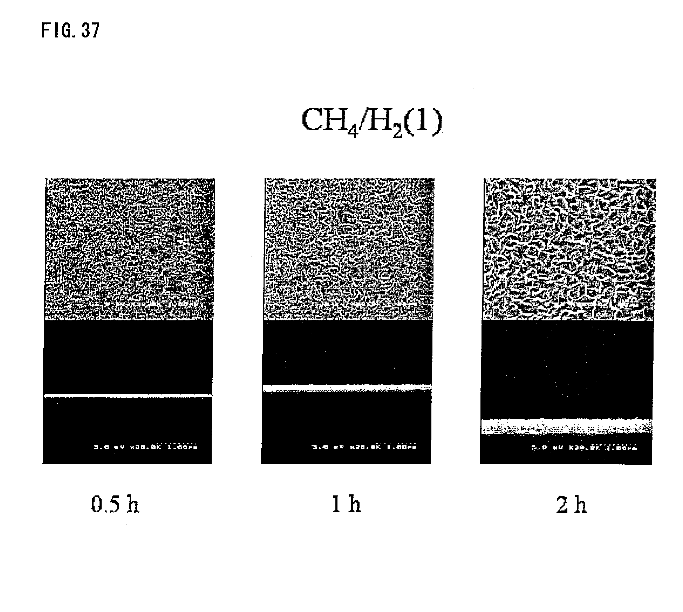

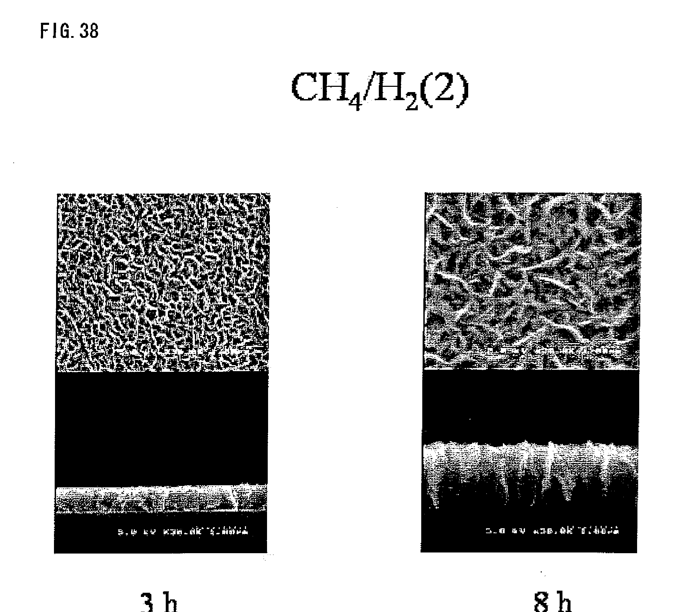

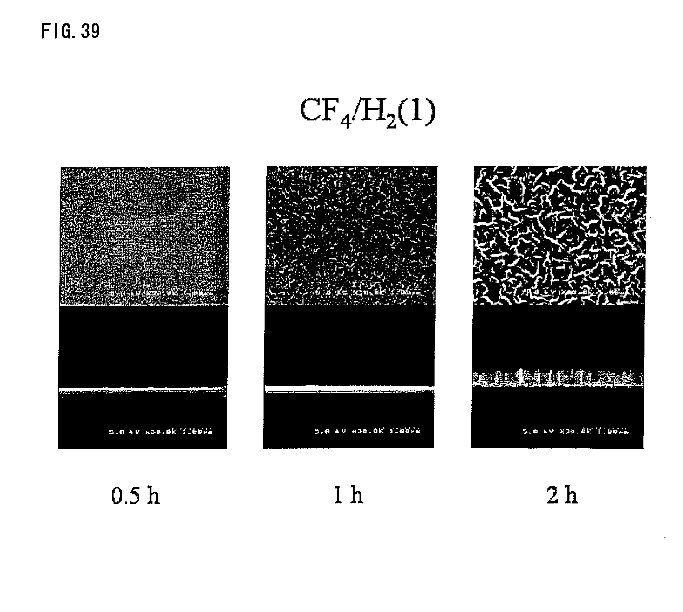

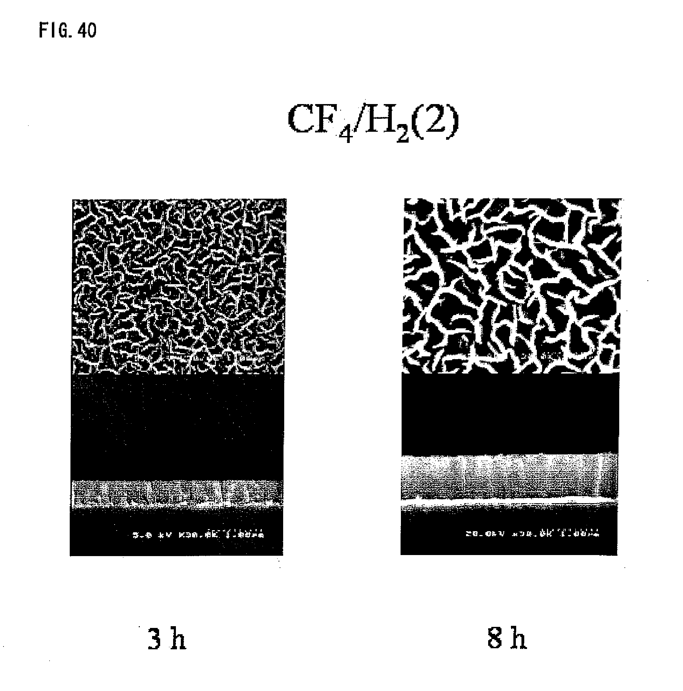

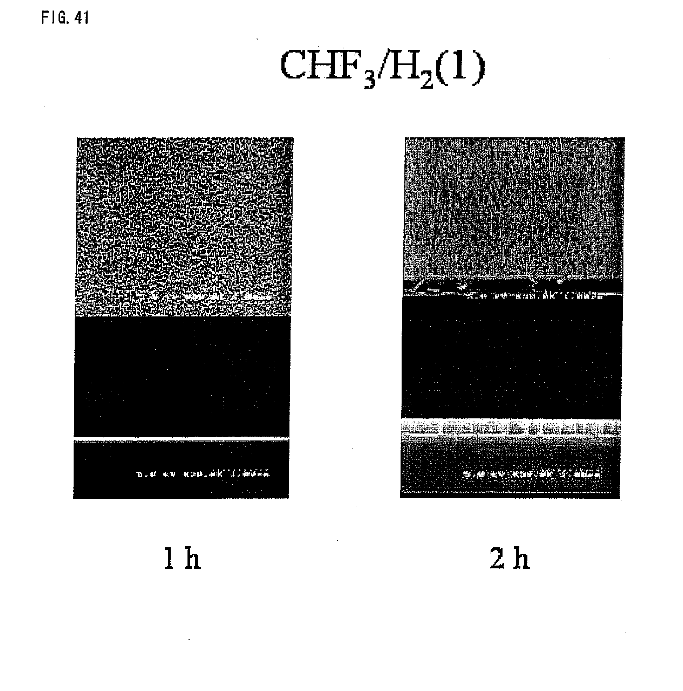

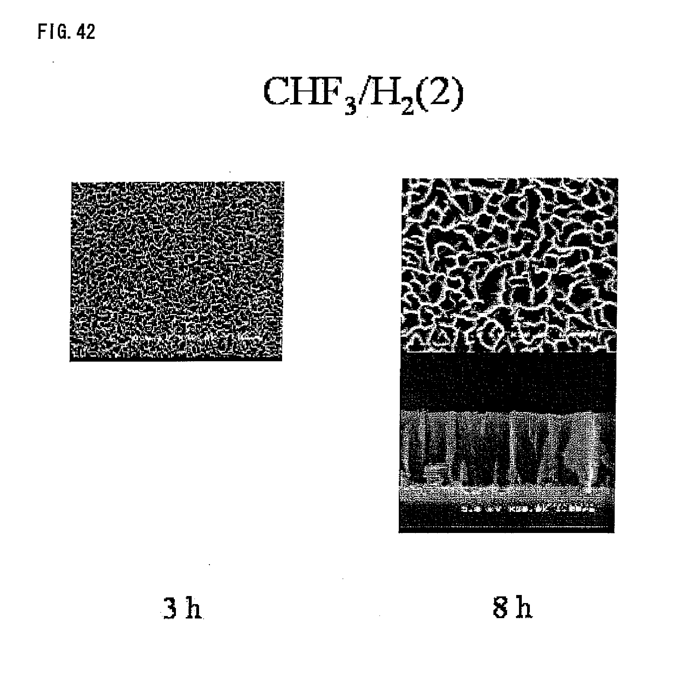

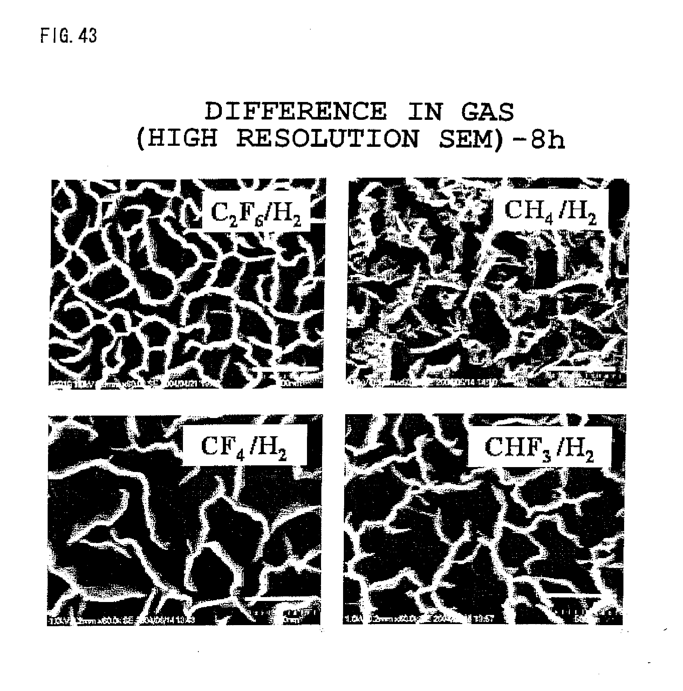

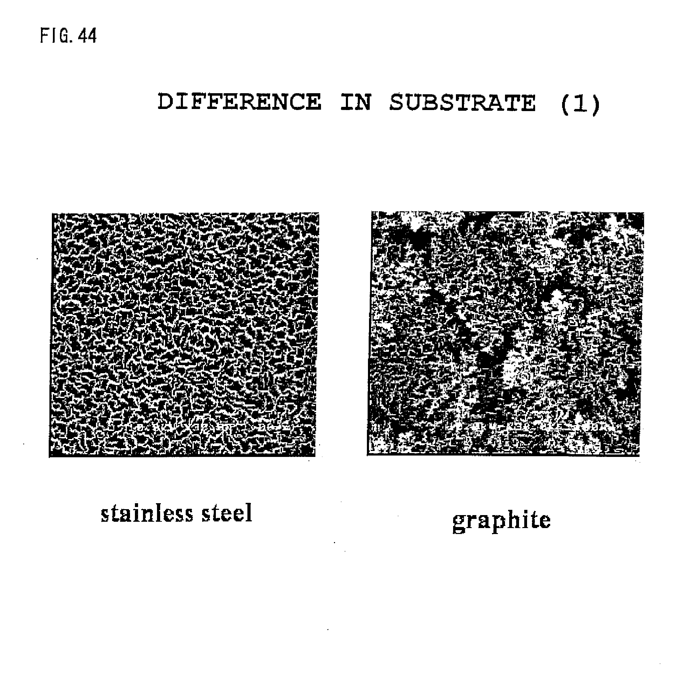

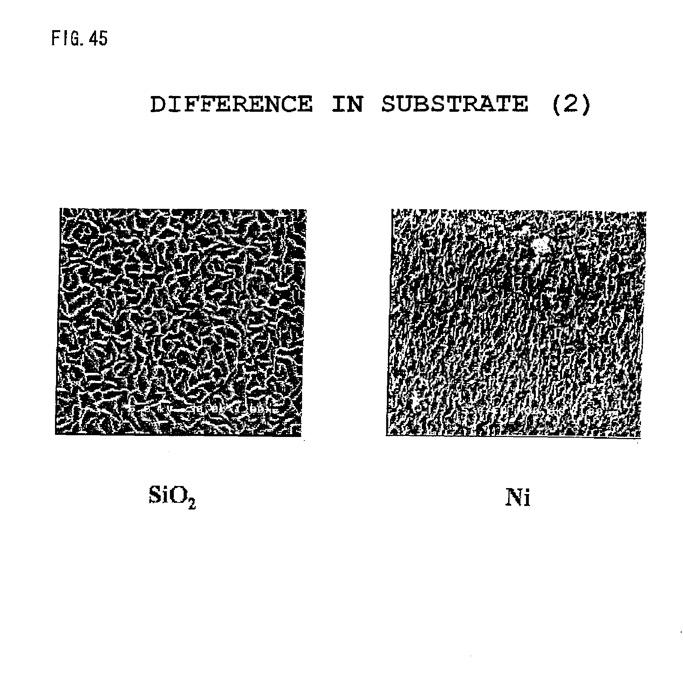

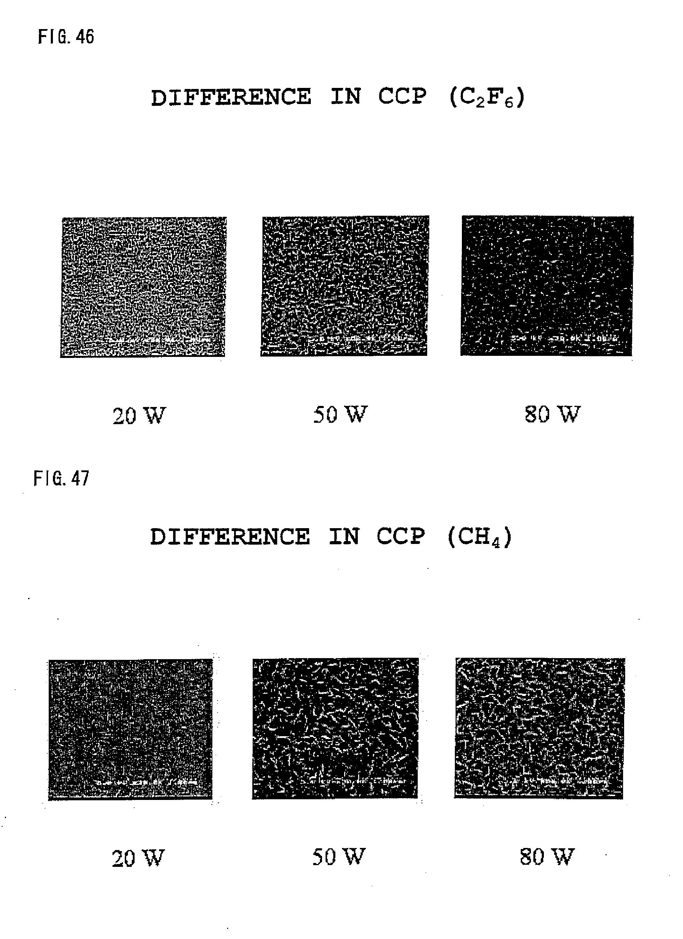

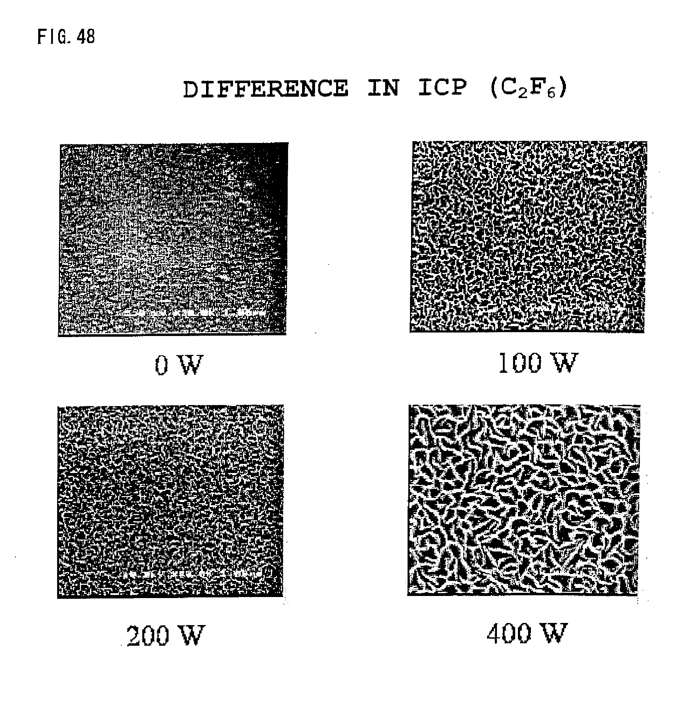

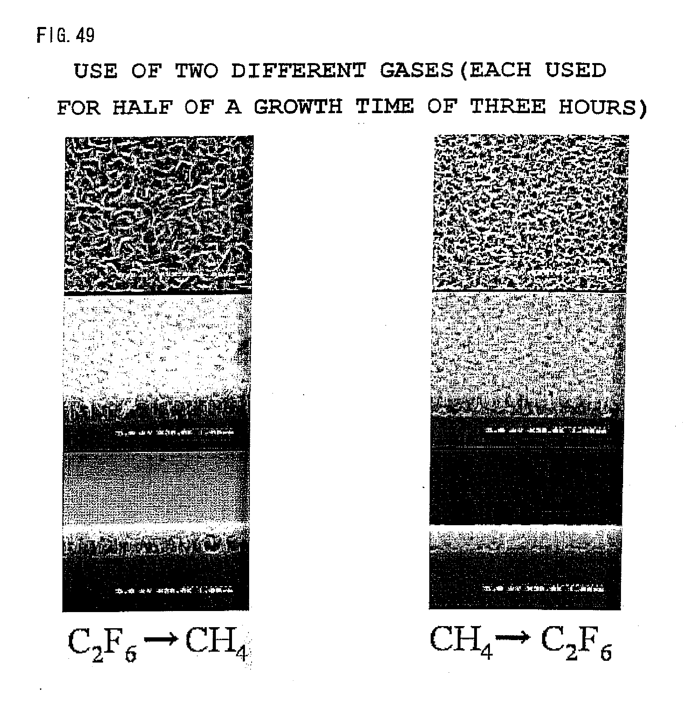

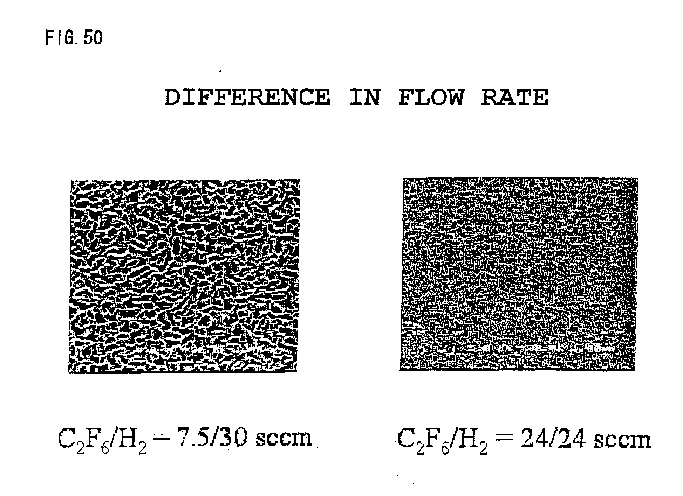

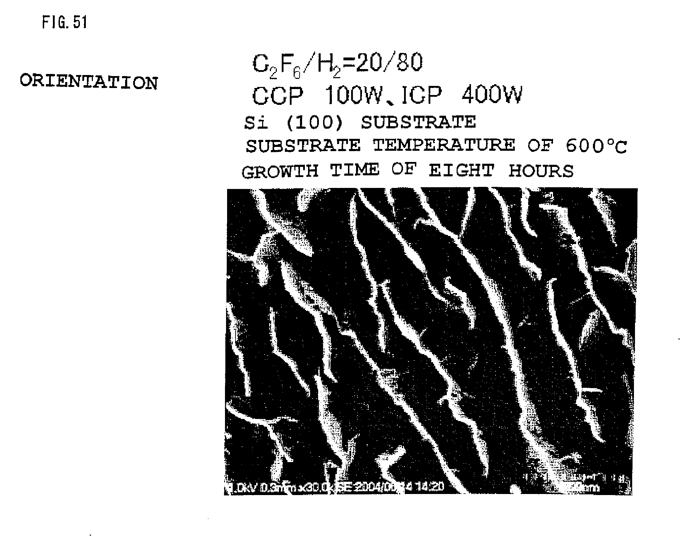

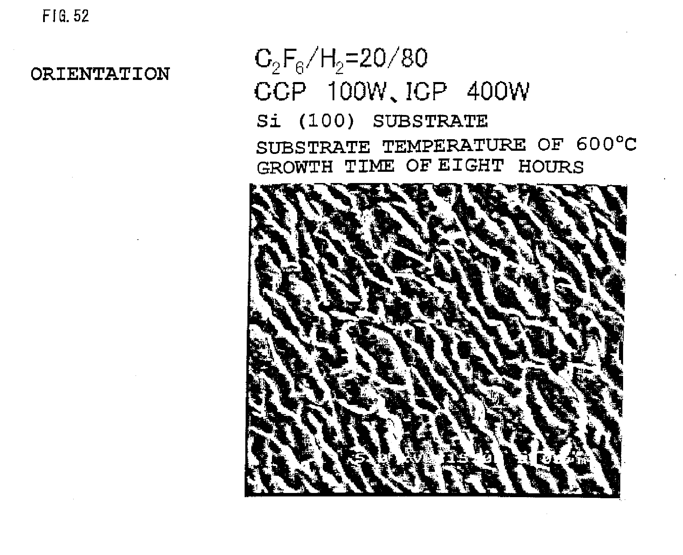

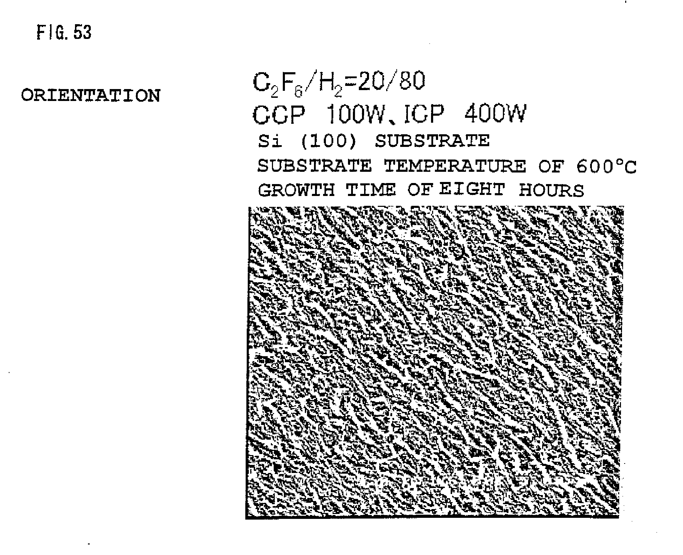

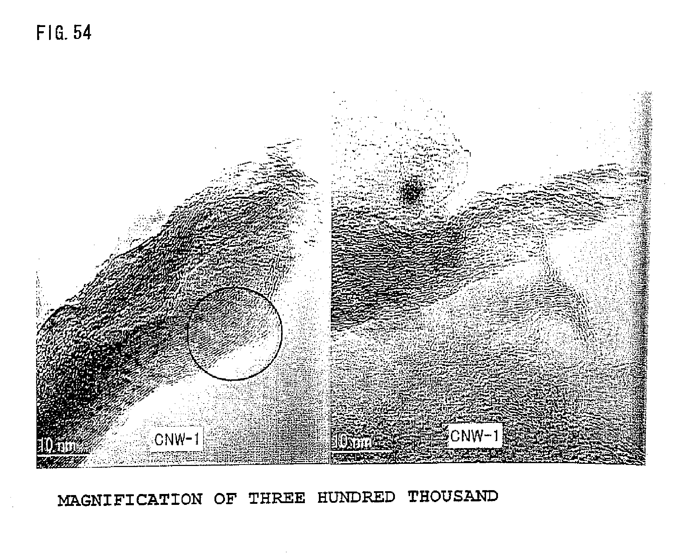

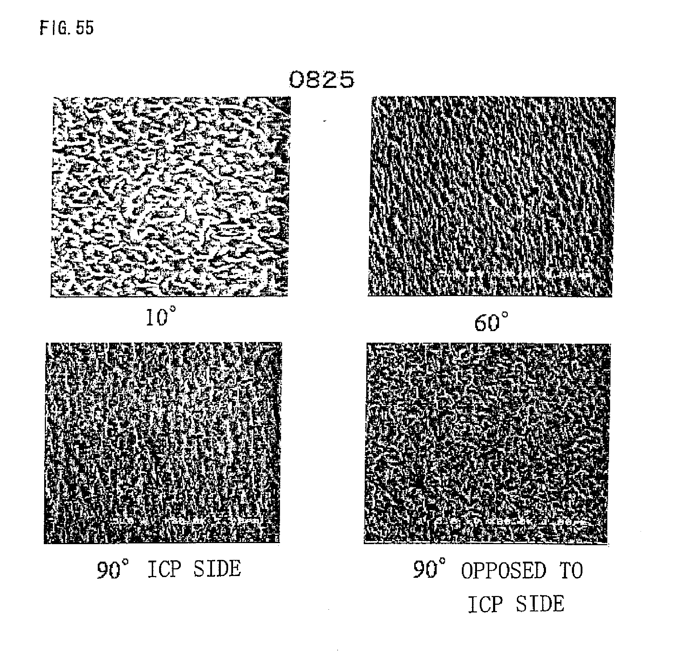

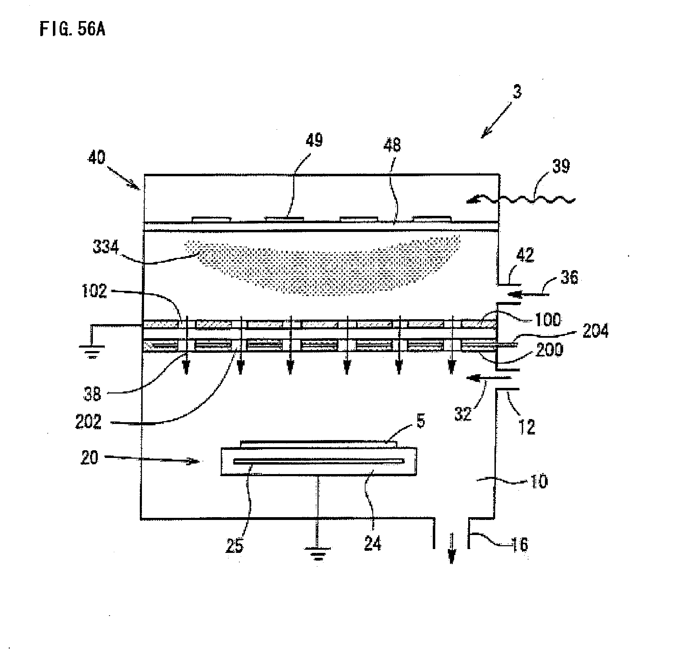

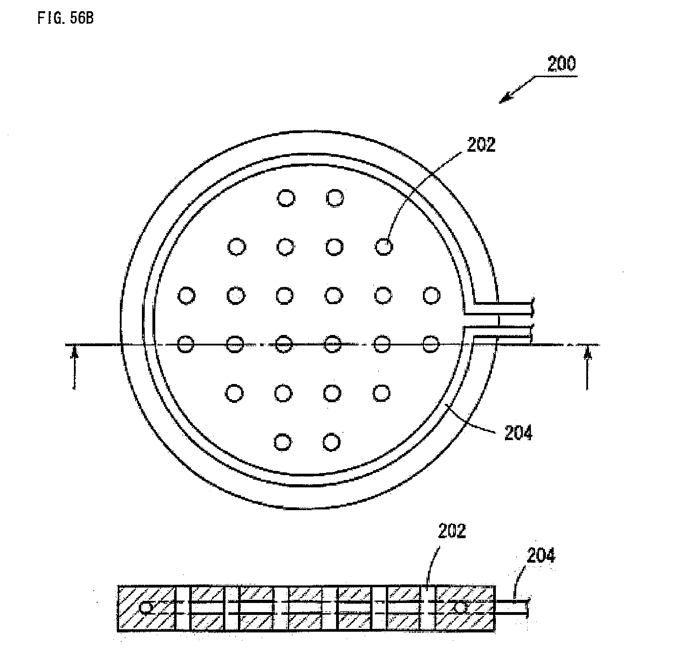

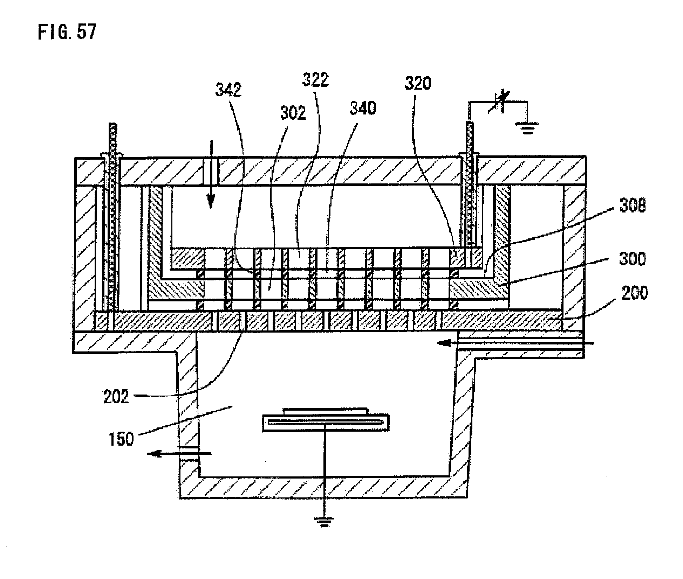

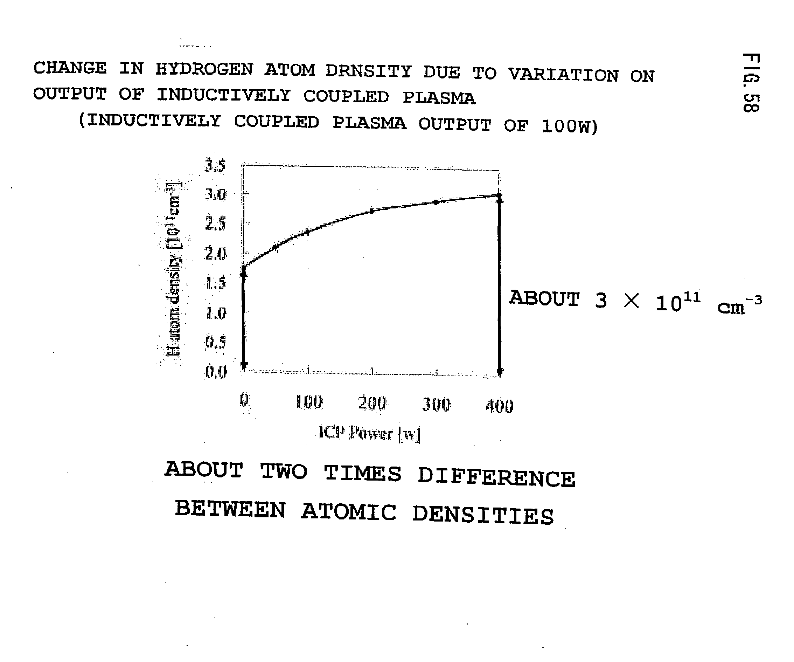

Fig. 30 is a SEM image of the nanostructures, viewed from above, produced in Experiment 9 and Fig. 31 is a SEM image of the nanostructures, viewed from above, produced in Experiment 10. The carbon nanowalls (Fig. 30) produced in Experiment 9, in which the source gas used was a fluorocarbon (C₂F₆), have an average thickness of about 10 to 30 nm. On the other hand, the carbon nanowalls (Fig. 31) produced in Experiment 10, in which the source gas used was a hydrocarbon (CH₄), have an average thickness of several nm. This shows that C₂F₆ is effective in forming carbon nanowalls with a large thickness. The thickness of the carbon nanowalls can be controlled by varying the amount of C₂F₆. The carbon nanowalls produced in Experiment 9 are different from those produced in Experiment 10 in property (for example, the flatness of the nanowalls) other than the thickness. These results show that properties of the carbon nanowalls can be controlled by selecting the type and/or composition of the source gas. Furthermore, the spacing between the carbon nanowalls can be controlled by selecting the type of the source gas.
[Experiment 11] The carbon nanowalls produced in Experiment 9 were evaluated for electron emission by applying a voltage to the carbon nanowalls. Fig. 32 shows the evaluation. As shown in this figure, the electric power determined sharply increases in the field intensity range of about 5.5 to 6 V/µm. This suggests that the carbon nanowalls produced in Experiment 9 are useful in producing field emission electron sources (electrodes). If the carbon nanowalls are coated with Pt or another metal, the resulting carbon nanowalls have high catalytic activity. The coated carbon nanowalls with high catalytic activity are applicable to electrodes for fuel cells.
[Experiment 12] Carbon nanowalls were grown on a Si (100) substrate in such a manner that a plasma was generated in a reaction chamber with an electric power of 100 W, radicals were generated with an electric power of 400 W, the ratio of the flow rate of C₂F₆ to that of H₂ was adjusted to 15 : 30 in sccm, and the temperature of the substrate was maintained at 500°C. Surfaces and cross sections of the carbon nanowalls different in growth time from each other were observed by SEM. Figs. 35 and 36 are SEM images of the carbon nanowalls. These figures show that thickness of the carbon nanowalls is saturated at a growth time of about two hours and the height thereof increases with an increase in growth time. Fig. 54 is a TEM image of the carbon nanowalls observed at a magnification of three hundred thousand times. This figure shows that a plurality of graphene sheets are arranged, that is, the carbon nanowalls are arranged. [Experiment 13] This experiment was performed under substantially the same conditions as those of Experiment 12 except that a CH₄ source gas was used instead of the C₂F₆ source gas. The ratio of the flow rate of CH₄ to that of H₂ was one to two, this ratio being the same as the ratio described in Experiment 12. Figs. 37 and 38 are SEM images of carbon nanowalls, produced in this experiment, different in growth time from each other. These carbon nanowalls have a smaller thickness and a higher density but a more disordered structure as compared to those of the carbon nanowalls produced using gaseous C₂F₆. These carbon nanowalls have a large number of branched sub-walls extending perpendicularly thereto. The figures show that the height of these carbon nanowalls increases with an increase in growth time. Since these nanowalls have such branched sub-walls, these carbon nanowalls are advantageous for certain applications. These carbon nanowalls are probably suitable for field electron emission or hydrogen occlusion.
[Experiment 14] This experiment was performed under substantially the same conditions as those of Experiment 12 except that a CF₄ source gas was used instead of the C₂F₆ source gas. The ratio of the flow rate of CF₄ to that of H₂ was one to two, this ratio being the same as the ratio described in Experiment 12. Figs. 39 and 40 are SEM images of carbon nanowalls, produced in this experiment, different in growth time from each other. These figures show that these carbon nanowalls as well as the carbon nanowalls produced using C₂F₆ have an ordered structure. Experiments 12 and 14 in which the source gases containing F are used suggest that the presence of F radicals and CF radicals allows the carbon nanowalls of these experiments to have such an ordered structure. This means that the use of a source gas containing F atoms is effective in forming ordered carbon nanowalls.
[Experiment 15] This experiment was performed under substantially the same conditions as those of Experiment 12 except that a CHF₃ source gas was used. The ratio of the flow rate of CHF₃ to that of H₂ was one to two, this ratio being the same as the ratio described in Experiment 12. Figs. 41 and 42 are SEM images of carbon nanowalls, produced in this experiment, different in growth time from each other. These figures show that these carbon nanowalls as well as the carbon nanowalls produced using C₂F₆ have an ordered structure. Experiments 12, 14, and 15 in which the source gases containing F are used suggest that the presence of F radicals and CF radicals allows the carbon nanowalls of these experiments to have such an ordered structure. This means that the use of a source gas containing F atoms is effective in forming ordered carbon nanowalls. In this example, this source gas contains species with C-H bonds. The source gas used in Experiment 12 also contains such species with C-H bonds. These carbon nanowalls as well as the carbon nanowalls produced in Experiment 12 have a small thickness. However, these carbon nanowalls have flat faces unlike the carbon nanowalls produced in Experiment 12. This means that the presence of the C-H bonds allows these carbon nanowalls to have a small thickness and the presence of the F radicals prevents these carbon nanowalls from being branched to allow these carbon nanowalls to have such flat faces.
[Experiment 16] Fig. 43 includes SEM images of carbon nanowalls, grown for eight hours, produced using source gases containing CH₄, C₂F₆, CF₄, or CHF₃. The carbon nanowalls produced using the source gases containing F have flat faces and are uniform. The carbon nanowalls produced using the source gases containing species with C-H bonds have disordered structures and have a small thickness. Since the source gases containing F are used, the carbon nanowalls can be efficiently produced.
[Experiment 17] Carbon nanowalls were grown on different substrates and then observed from above by SEM. Figs. 44 and 45 are SEM images thereof. These figures show that the carbon nanowalls, as well as those formed on a Si substrate, formed on a stainless steel substrate or a SiO₂ substrate are uniform. However, the carbon nanowalls formed on a graphite substrate are nonuniform and have no flat faces. The carbon nanowalls formed on a graphite substrate are more uniform and dense as compared to those formed on the above substrates and are oriented (the carbon nanowalls are substantially oriented longitudinally in a single direction). [Experiment 18] Carbon nanowalls were grown in such a manner that the feed rate of H radicals was varied. The carbon nanowalls were observed from above by SEM. Figs. 46, 47, and 48 are SEM images thereof. Figs. 46 and 48 show the carbon nanowalls farmed using gaseous C₂F₆ and Fig. 47 shows the carbon nanowalls formed using gaseous CH₄. Since the amount of generated radicals is proportional to the electric power applied, the electric power applied is proportional to the amount of H radicals fed to a reaction chamber. These figures show that an increase in the amount of the H radicals fed to the reaction chamber increases the spacing between the carbon nanowalls to reduce the density of the carbon nanowalls and reduces the thickness of the carbon nanowalls. This phenomenon is independent on the type of source gas. Fig. 58 shows the relationship between the electric power required to produce the radicals and the density of hydrogen atoms in a reaction region. As is clear from this figure, an increase in electric power increases the hydrogen atom density, that is, the density of the hydrogen atoms generated with an electric power of 400 W is two times greater than that of the hydrogen atoms generated without using any H radicals. The density of the hydrogen atoms generated without using any H radicals is 1.5 × 10¹¹/cm³ and the absence of any H radicals prevents the formation of the carbon nanowalls. The density of the hydrogen atoms generated under conditions suitable for forming the carbon nanowalls is 3 × 10¹¹/cm³, which is two times greater than that described above. These suggest that the presence of the H radicals is particularly effective in forming the carbon nanowalls.
[Experiment 19] Carbon nanowalls were produced using different source gases each used in a former or latter part of a step of growing the carbon nanowalls. The carbon nanowalls were observed from above by SEM. Fig. 49 includes SEM images thereof. The carbon nanowalls produced using gaseous C₂F₆ and gaseous CH₄ in that order have configurations similar to those of carbon nanowalls produced using only gaseous C₂F₆. In contrast, the carbon nanowalls produced using gaseous CH₄ and gaseous C₂F₆ in that order have configurations similar to those of carbon nanowalls produced using only gaseous CH₄. This shows that configurations of carbon nanowalls depend on the type of a source gas used primarily. Therefore, any carbon nanowalls having desired configurations can be produced separately using a gaseous compound containing carbon and fluorine and another gaseous compound containing carbon and hydrogen. Furthermore, configurations of the carbon nanowalls obtained probably depend on the composition of gas used during the growth of the carbon nanowalls. Therefore, if a gaseous compound containing carbon and fluorine and another gaseous compound containing carbon and hydrogen are alternately used, carbon nanowalls having portions with configurations depending on these compounds can be probably formed. These carbon nanowalls are probably suitable for hydrogen occlusion.
[Experiment 20] Carbon nanowalls were produced in such a manner that the ratio of the flow rate of a source gas and that of gaseous H₂ was varied. The carbon nanowalls were observed from above by SEM. Fig. 50 includes SEM images thereof. These figures show that the carbon nanowalls produced at a C₂F₆ flow rate of 7.5 sccm and a H₂ flow rate of 30 sccm are larger and more uniform and have a greater spacing and a greater thickness as compared to those produced at a C₂F₆ flow rate of 24 sccm and a H₂ flow rate of 24 sccm. This suggests that an increase in the feed rate of H radicals enhances the uniformity of the carbon nanowalls and increases the length and thickness thereof.
[Experiment 21] Carbon nanowalls were grown for eight hours in such a manner that the ratio of the flow rate of C₂F₆ and that of H₂ was adjusted to 20 : 80 in sccm, a CCP was generated in a reaction chamber with an electric power of 100 W, H radicals for an ICP were generated with an electric power of 400 W, Si (100) substrates were used, and the temperature of each substrate was maintained at 600°C. One of the substrates was tilted such that a line normal thereto made an angle of 90 degrees with the direction of an RF electric field for generating a plasma. The carbon nanowalls formed on the substrate were observed from above by SEM. Figs. 51, 52, and 53 (the magnification is reduced in that order) are SEM images thereof. These figures show that the carbon nanowalls are longitudinally oriented in a single direction (probably the direction of the RF electric field). That is, the carbon nanowalls are oriented in a predetermined direction. The growth of the carbon nanowalls greatly depends on the radicals used, that is, the orientation of the carbon nanowalls depends on the direction of the radicals applied to a face of the substrate. Fig. 55 includes SEM images of the carbon nanowalls formed on the substrates that were tilted such that lines normal thereto made an angle of 10, 60, or 90 degrees with the direction of the RF electric field. This figure shows that the carbon nanowalls formed on the substrate of which the normal line is tilted 90 degrees have the highest degree of orientation. Oriented carbon nanowalls can be probably formed on a substrate that is tilted such that a line normal thereto is tilted with respect to the direction of the H radicals applied to this substrate.
[Fourth Example] This example provides an apparatus, similar to the apparatus shown in Fig. 3, including a shield member. Figs. 56A and 56B show configurations of this apparatus. Members having the same reference numerals as those of the members shown in Fig. 3 have the same functions as those of the members shown in Fig. 3. This apparatus includes a first electrode 200 having a large number of perforations 202. Generated plasma particles collide with the walls of the perforations 202. In this process, electrons are absorbed by the walls thereof and ions are converted into radicals. Original radicals pass through the perforations 202 to enter a reaction chamber 10. The shield member 100 is disposed between the first electrode 200 and a waveguide tube 47 in parallel to the first electrode 200 and has a large number of perforations 102. The perforations 102 are aligned with the perforations 202; hence, these radicals pass through the perforations 102 and 202 to enter the reaction region 10. The shield member 100 is grounded. Therefore, when an RF electric power is applied to the first electrode 200, discharge is prevented from occurring between the first electrode 200 and the waveguide tube 47. The distance between the first electrode 200 and the shield member 100 is less than that between the first electrode 200 and a second electrode 24 and the pressure in an atmosphere is low. Therefore, avalanche is prevented from occurring between the first electrode 200 and the shield member 100 and thus discharge is prevented from occurring therebetween but allowed to occur between the first electrode 200 and the second electrode 24. The RF electric power can be prevented from affecting the waveguide tube 47. The first electrode 200 has a channel 204, connected to the perforations 202, for feeding a source gas. The source gas and H radicals are fed to the reaction region 10 through the perforations 202. According to this configuration, the ratio of the feed rate of the source gas to that of the radicals can be precisely controlled and the source gas and the radicals can be fed to a base material in the same direction; hence, carbon nanowalls can be uniformly grown. This apparatus is characterized in that the shield member 100 is disposed between a radical generator and a plasma discharger.
[Fifth Example] A plasma-processing apparatus will now be described. The plasma-processing apparatus is not only useful in producing carbon nanowalls but also useful in forming a thin film and then ashing or etching the thin film by introducing radicals into a reaction chamber. With reference to Fig. 57, the plasma-processing apparatus includes a first electrode 200 to which an RF electric power is applied and which has a large number of perforations 202. The perforations 202 are used to convert ions into radicals in the same manner as described above. A shield member 300 having a large number of perforations 302 is disposed above the first electrode 200. The shield member 300 is tubular and separates a radical-generating region from a reaction region. A hollow cathode 320 is disposed in parallel to the bottom face 308 of the shield member 300. The hollow cathode 320 has a large number of perforations 322 aligned with the perforations 302 and 202. An insulating plate 340 made of ceramic is disposed between the hollow cathode 320 and a shield plate 206. The insulating plate 340 has a large number of perforations 342 aligned with the perforations 322, 302, and 202. Applying a negative direct current voltage to the hollow cathode 320 generates plasma particles in the perforations 322, 302, and 202. The plasma particles are accelerated toward the first electrode 200 and then converted into radicals in the perforations 202 thereof. These radicals are introduced into a reaction region 150. If a high-frequency electric power is applied to the first electrode 200, the shield member 300 prevents the high-frequency electric power from being transmitted to the hollow cathode 320. This allows the plasma particles to be reliably generated in the perforations 322, 302, and 202 and also allows these radicals to be reliably supplied.

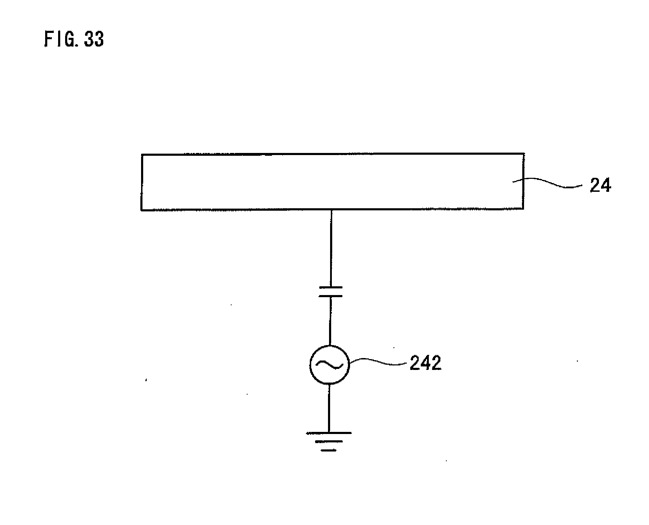

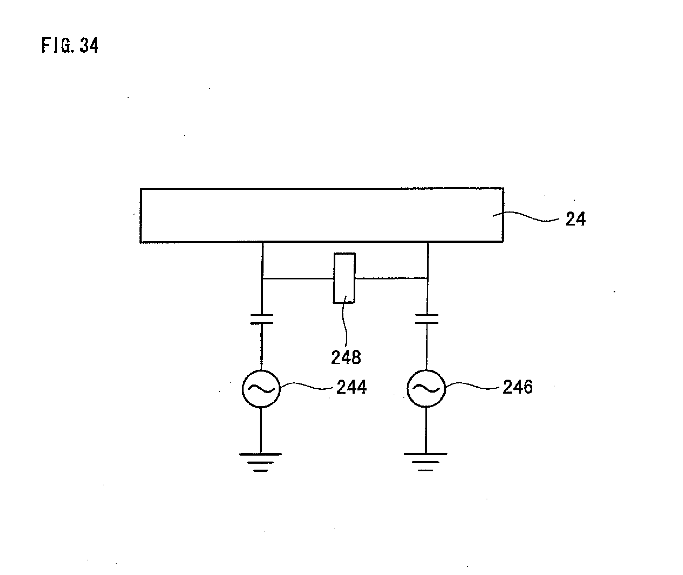

The examples of the present invention are as described above in detail. The examples are for exemplification and the claims of the present invention are not limited to the examples. The claims cover various variations and modifications of the examples. For example, high-frequency waves (a frequency of, for example, 400 KHz, 1.5 MHz, or 13.56 MHz) can be applied the second electrode (lower electrode) 24 included in any one of the apparatuses shown in Figs. 1 to 6. This configuration is effective in controlling the energy of charged particles. Figs. 33 and 34 are schematic views of exemplary systems for applying high-frequency waves to second electrodes 24. With reference to Fig. 33, reference numeral 242 represents an alternating current power supply for generating high-frequency waves with a frequency of, for example, 400 KHz, 1.5 MHz, or 13.56 MHz. With reference to Fig. 34, reference numeral 244 represents an alternating current power supply for generating high-frequency waves with a frequency of, for example, 13.56 MHz. Reference numeral 246 in this figure represents an alternating current power supply for generating high-frequency waves with a frequency of, for example, 400 kHz. The power supplies 244 and 246 are connected to each other with a low-pass filter 248. The alternating current power supply 246 may be replaced with a direct current power supply. In the examples, the carbon nanowalls are produced at a reduced pressure; however, the carbon nanowalls can be produced at an atmospheric pressure with any one of the apparatuses by any one of the methods. The technical elements specified in this specification or shown in the accompanying drawings may be used alone or in combination so as to provide technical advantages and are not limited to combinations specified in the claims of this application. The techniques specified in this specification or shown in the accompanying drawings are used to simultaneously achieve a plurality of objects. If any one of the objects can be achieved, the techniques are considered to be valuable.

## Claims

1. A method for producing carbon nanowalls comprising the steps of creating a plasma atmosphere in at least one region of a reaction chamber by plasmatizing a source material containing carbon, introducing radicals generated outside the plasma atmosphere into the plasma atmosphere, and growing carbon nanowalls on a base material disposed in the reaction chamber.

2. The method according to Claim 1, wherein the radicals are generated by decomposing a radical source outside the reaction chamber.

3. The method according to Claim 2, wherein the radicals are generated by applying microwaves, UHF waves, VHF waves, or RF waves to the radical source and/or bringing the radical source in contact with a hot metal catalyst.

4. The method according to any one of Claims 1 to 3, wherein the radicals include hydrogen radicals.

5. The method according to any one of Claims 1 to 3, wherein hydrogen radicals are generated by decomposing a radical source containing hydrogen and then introduced into the plasma atmosphere.

6. The method according to any one of Claims 1 to 5, wherein the source material contains carbon and hydrogen.

7. The method according to any one of Claims 1 to 5, wherein the source material contains carbon and fluorine.

8. The method according to any one of Claims 1 to 7, wherein at least one of the feed rate of the source material, the plasmatization degree of the source material, and the feed rate of the radicals is controlled on the basis of the concentration of carbon radicals, hydrogen radicals, or fluorine radicals in the reaction chamber.

9. An apparatus for producing carbon nanowalls grown on a base material, comprising a reaction chamber to which a source material containing carbon is fed and in which the base material is disposed, a plasma discharger for plasmatizing the source material in the reaction chamber, a radical-generating chamber to which a radical source is fed, and a radical generator for generating radicals from the radical source in the radical-generating chamber, wherein the radicals generated by the radical generator are introduced into the reaction chamber.

10. The apparatus according to Claim 9, wherein the radical generator has at least one of a function of applying microwaves, UHF waves, VHF waves, or RF waves to the radical-generating chamber and a function of heating a metal catalyst opposed to the radical-generating chamber.

11. The apparatus according to Claim 9 or 10, wherein the radical generator is configured such that the radicals are fed to the reaction chamber through a radical-introducing port that open on a face of the base material on which the carbon nanowalls are formed.

12. The apparatus according to any one of Claims 9 to 11, further comprising a concentration-measuring unit for measuring the concentration of carbon radicals in the reaction chamber, wherein the concentration-measuring unit includes a light emitter for emitting an emission line characteristic of the radicals into the reaction chamber and a light detector for detecting the emission line emitted from the light emitter.

13. The apparatus according to any one of Claims 9 to 12, further comprising a concentration-measuring unit for measuring the concentration of hydrogen radicals in the reaction chamber, wherein the concentration-measuring unit includes a light emitter for emitting an emission line characteristic of the radicals into the reaction chamber and a light detector for detecting the emission line emitted from the light emitter.

14. The apparatus according to any one of Claims 9 to 13, further comprising a concentration-measuring unit for measuring the concentration of fluorine radicals in the reaction chamber, wherein the concentration-measuring unit includes a light emitter for emitting an emission line characteristic of the radicals into the reaction chamber and a light detector for detecting the emission line emitted from the light emitter.

15. The apparatus according to any one of Claims 12 to 14, further comprising a control unit for controlling at least one of the feed rate of the source material, the plasmatization degree of the source material, the feed rate of the radicals, the feed rate of the radical source, and the radicalization degree of the radical source on the basis of the radical concentration determined with any one of the concentration-measuring units.

16. The apparatus according to any one of Claims 9 to 15, wherein the reaction chamber has a plurality of radical-introducing ports, spaced from each other, opposed to the face of the base material on which the carbon nanowalls are formed, the base material being disposed in the reaction chamber.

17. The method according to any one of Claims 1 to 8, wherein the base material has no metal catalyst disposed thereon.

18. The method according to any one of Claims 1 to 5, wherein the source material contains at least one of carbon, hydrogen, and fluorine that are essential components.

19. The method according to Claim 6, wherein the source material is CH₄.

20. The method according to Claim 7, wherein the source material is at least one of C₂F₆ and CF₄.

21. The method according to Claim 18, wherein the source material is CHF₃.

22. The method according to any one of Claims 1 to 5, wherein the source material is selected from a gas containing carbon and hydrogen; a gas containing carbon and fluorine; and a gas containing carbon, fluorine, and hydrogen and at least two of the gases are alternately switched in any one of the steps.

23. The method according to any one of Claims 1 to 8 and 17 to 22, wherein the introduced radicals include no OH radicals.

24. The method according to any one of Claims 1 to 8 and 17 to 23, wherein the amount of the introduced radicals in the region is measured and at least one of the feed rate of the source material and the feed rate of the radicals is controlled on the basis of the radical amount.

25. The method according to any one of Claims 1 to 8, wherein properties of the carbon nanowalls are varied by varying the ratio of the feed rate of a source material containing carbon and fluorine and that of another material containing carbon and hydrogen.

26. The method according to any one of Claims 1 to 8 and 17 to 25, wherein the carbon nanowalls are oriented by tilting a line normal to the base material with respect to the direction of a electric field.

27. The method according to any one of Claims 1 to 8 and 17 to 26, further comprising the step of pretreating the base material by applying the radicals to the base material without plasmatizing the source material before the growth of the carbon nanowalls.

28. A carbon nanowall comprising two-dimensional carbon nanostructures containing no metal catalyst.

29. The carbon nanowall according to Claim 28, wherein the carbon nanostructures are wall-shaped and extend from a base material.

30. The carbon nanowall according to Claim 29, wherein the carbon nanostructures are longitudinally oriented in a single direction.

31. The apparatus according to any one of Claims 9 to 16, further comprising a shield member which is grounded, which is disposed between the reaction chamber and the radical-generating chamber, and which has a large number of perforations through which the radicals pass.

32. The apparatus according to any one of Claims 9 to 16, wherein the radical-generating chamber is located above or below the reaction chamber and the radicals are applied to the growth face of the base material disposed in the reaction chamber.

33. The apparatus according to Claim 32, wherein the plasma discharger includes a first electrode for applying a high-frequency electric power and a second electrode which is opposed to the first electrode, which is parallel to the first electrode, and on which the base material is set, the first electrode has a large number of perforations, and the radicals are converted from ions by the collision of particles generated in the radical-generating chamber with the walls of the perforations and then introduced into the reaction chamber.

34. The apparatus according to Claim 33, wherein the source material is fed to the reaction chamber through the perforations of the first electrode.

35. A parallel plate-type plasma-processing apparatus comprising a first electrode, having a large number of perforations, for applying an electric power; a second electrode which is opposed to the first electrode, which is parallel to the first electrode, and on which a workpiece is set; a reaction region to which gas is fed, which is located between the first and second electrodes, and in which a plasma is generated; a high-frequency power supply for applying high-frequency waves to a region between the first and second electrodes to plasmatize the gas; a radical-generating region which is spaced from the second electrode with the first electrode disposed therebetween and to which a radical source is fed; a radical generator for generating radicals from the radical source in the radical-generating region; a shield member which is disposed between the first electrode and the radical-generating region, which partitions the radical-generating region, which has a large number of perforations that are aligned with the perforations of the first electrode such that the radicals pass through these perforations, and which is grounded, wherein the radicals generated by the radical generator are introduced into the reaction region through the perforations of the shield member and the perforations of the first electrode.

36. The plasma-processing apparatus according to Claim 35, wherein the radical generator serves as a microhollow plasma generator and includes a pair of an inside electrode and an outside electrode, the inside and outside electrodes are spaced from each other and have a large number of microhollows which are aligned with each other and in which plasmas are generated, the inside electrode serves as a cathode, and the outside electrode is located close to the reaction region and grounded so as to serve as well as the shield member.

37. The plasma-processing apparatus according to Claim 35 or 36, wherein the gas fed to the reaction chamber is fed to the reaction region through the perforations of the first electrode.
